(19) Europäisches Patentamt
European Patent Office
Office européen des brevets

(11) **EP 4 561 231 A1**

(12) **EUROPEAN PATENT APPLICATION**
published in accordance with Art. 153(4) EPC

(43) Date of publication:
**28.05.2025 Bulletin 2025/22**

(21) Application number: **23851955.7**

(22) Date of filing: **10.08.2023**

(51) International Patent Classification (IPC):
***H04W 72/04*** *(2023.01)*

(52) Cooperative Patent Classification (CPC):
**H04W 72/04**

(86) International application number:
**PCT/CN2023/112347**

(87) International publication number:
**WO 2024/032735 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210970323**
**30.09.2022 CN 202211214477**

(71) Applicant: **Huawei Technologies Co., Ltd.**
**Shenzhen, Guangdong 518129 (CN)**

(72) Inventors:
- **HUANG, Xiuxuan**
  **Shenzhen, Guangdong 518129 (CN)**
- **GAO, Fei**
  **Shenzhen, Guangdong 518129 (CN)**
- **HUA, Meng**
  **Shenzhen, Guangdong 518129 (CN)**
- **LI, Xinxian**
  **Shenzhen, Guangdong 518129 (CN)**
- **DING, Mengying**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **DOWNLINK CONTROL INFORMATION DETECTION METHOD, AND RELATED APPARATUS**

(57) A downlink control information detection method and a related apparatus are provided. The method includes: For first downlink control information DCI for scheduling data channels of a plurality of cells, a terminal determines a target cell corresponding to the first DCI, to count a size budget of the first DCI on the target cell, so that a count value of a size budget of DCI on the target cell does not exceed a preset threshold. A payload size of the first DCI is different from that of second-type DCI for scheduling a data channel of one cell. Further, the terminal performs blind detection for the first DCI based on the payload size of the first DCI. In this way, even if the first DCI of a new type is introduced, a limitation that the count value of the size budget of the DCI on the target cell does not exceed the preset threshold can be met. In addition, the count value of the size budget of the DCI on the target cell not exceeding the preset threshold helps reduce complexity of the blind detection.

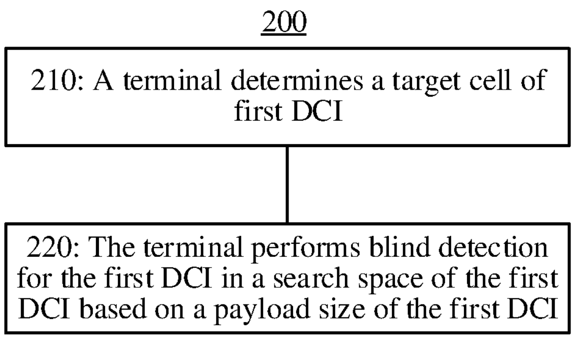


FIG. 2

EP 4 561 231 A1

## Description

This application claims priorities to Chinese Patent Application No. 202210970323.8, filed with the China National Intellectual Property Administration on August 12, 2022 and entitled "DOWNLINK CONTROL INFORMATION DETECTION METHOD AND RELATED APPARATUS", and to Chinese Patent Application No. 202211214477.0, filed with the China National Intellectual Property Administration on September 30, 2022 and entitled "DOWNLINK CONTROL INFORMATION DETECTION METHOD AND RELATED APPARATUS", both of which are incorporated herein by reference in their entireties.

## TECHNICAL FIELD

This application relates to the communication field, and in particular, to a downlink control information detection method and a related apparatus.

## BACKGROUND

Carrier aggregation (carrier aggregation, CA) is to aggregate two or more component carriers (component carriers, CCs) to support a larger transmission bandwidth. In a CA scenario, a terminal may have a plurality of serving cells (serving cells), and the plurality of serving cells include one primary cell (primary cell, PCell) and one or more secondary cells (secondary cells, SCells). A network device may schedule data channels on a plurality of carriers (which may alternatively be understood as scheduling data channels of a plurality of cells) by using a plurality of pieces of downlink control information (downlink control information, DCI). In other words, a data channel of each cell needs to be scheduled by using one piece of DCI.

For each scheduled cell, the terminal does not expect that there are too many types of payload sizes of DCI for which blind detection is to be performed and that is scrambled by using a cell radio network temporary identifier (cell radio network temporary identifier, C-RNTI), which may cause an exponential increase in a number of times of blind detection, and increase complexity of the blind detection. However, currently, there are six existing DCI formats, and after alignment, there are three payload sizes. If a new type of DCI is introduced, a different payload size may be introduced. Consequently, types of payload sizes of DCI for which blind detection is to be performed by the terminal exceed a limit.

Therefore, how to design newly introduced DCI to avoid a sharp increase in complexity of blind detection becomes a technical problem that urgently needs to be resolved.

## SUMMARY

This application provides a downlink control information detection method and a related apparatus, to meet that types of payload sizes of DCI for which blind detection is to be performed by a terminal do not exceed a limit, so that a sharp increase in complexity of blind detection is avoided.

According to a first aspect, this application provides a DCI detection method. The method may be performed by a terminal, may be performed by a component (such as a chip or a chip system) configured in the terminal, or may be implemented by a logical module or software that can implement all or a part of functions of the terminal. This is not limited in this application.

For example, the terminal determines, for first DCI, a target cell corresponding to the first DCI, to count a size budget of the first DCI on the target cell, so that a count value of a size budget of DCI on the target cell does not exceed a preset threshold. The first DCI is for scheduling data channels of a plurality of cells, and a payload size of the first DCI is different from that of second-type DCI for scheduling a data channel of one cell. Further, the terminal performs blind detection for the first DCI based on the payload size of the first DCI.

In this way, even if the first DCI of a new type is introduced, a limitation that the count value of the size budget of the DCI on the target cell does not exceed the preset threshold can be met, and this helps avoid a problem in which complexity of the blind detection increases due to introduction of the DCI of the new type.

Optionally, the terminal may determine the target cell in any one of the following possible implementations.

In a first possible implementation, a network device indicates the target cell to the terminal. For example, the network device sends, to the terminal, first indication information indicating the target cell. Correspondingly, the terminal receives the first indication information. In other words, the network device may indicate, to the terminal by using the first indication information, a specific cell on which the size budget of the first DCI is counted. When indicating the target cell to the terminal, the network device needs to ensure that types of payload sizes of the DCI on the target cell do not exceed a limit.

In a second possible implementation, the terminal determines the target cell according to a predefined rule.

In a possible design of the predefined rule, the target cell is a cell with a smallest cell index in the plurality of cells, or the target cell is a cell with a largest cell index in the plurality of cells.

In another possible design of the predefined rule, the target cell is a cell with a smallest count value of a size budget of the second-type DCI in the plurality of cells. In other words, after aligning second-type DCI of each of the plurality of cells according to an alignment rule, the terminal selects the cell with the smallest count value of the size budget of the second-type DCI as the target cell. In this way, the terminal may flexibly select the target cell from the plurality of cells, for example, select a cell with a minimum count value of a current second-type DCI size budget as the target cell, so that types of payload sizes of DCI on each cell does not exceed the limit.

In still another possible design of the predefined rule, the target cell is a cell that is in the plurality of cells and on which a count value of a size budget of the second-type DCI does not exceed the preset threshold. For example, the terminal directly counts the size budget of the first DCI on the cell that is in the plurality of cells and on which the count value of the size budget of the second-type DCI does not exceed the preset threshold.

Before performing blind detection, the terminal needs to determine a location of a start control channel element (control channel element, CCE). In this application, a location of a start CCE carrying the first DCI is determined based on a carrier indication corresponding to the target cell. In this way, after the first DCI is introduced, the terminal can accurately determine the location of the start CCE, so that the terminal performs blind detection for the first DCI based on the location of the start CCE. For example, after determining the target cell, the terminal determines the carrier indication corresponding to the target cell, and further determines the location of the start CCE based on the carrier indication.

In a blind detection process, a number of times of blind detection for the first DCI needs to be counted. In this application, the number of times of blind detection for the first DCI may be counted on the target cell. In other words, the size budget of the first DCI and the number of times of blind detection for the first DCI may be counted on a same cell.

In addition, a number of non-overlapping CCEs may also be counted on the target cell. The terminal performs blind detection in a search space of the first DCI. In the blind detection process, the number of non-overlapping CCEs needs to be counted. In this application, after determining the target cell, the terminal may count the number of non-overlapping CCEs on the target cell.

According to a second aspect, for a problem of counting a number of times of blind detection for first DCI in a blind detection process, this application provides another DCI detection method. The method may be performed by a terminal, may be performed by a component (such as a chip or a chip system) configured in the terminal, or may be implemented by a logical module or software that can implement all or a part of functions of the terminal. This is not limited in this application.

For example, a terminal receives second indication information, where the second indication information indicates L scheduled cells, $1 \leq L < M$, L and M are integers, and M is a total number of scheduled cells; and performs blind detection for first DCI in a search space of the first DCI, where the first DCI is for scheduling data channels of a plurality of cells, and a number of times of blind detection performed for the first DCI is counted on the L cells. In comparison with counting on each scheduled cell, this helps save a blind detection opportunity. For example, a number of times of blind detection of a cell on which counting is not performed may be for other DCI.

In a possible case, the L cells include a cell for which no search space is configured in the M scheduled cells. In this way, a blind detection opportunity of another cell configured with a search space may be for detection for another type of DCI. For example, the first DCI is sent on a cell 1, and the first DCI is for scheduling data channels of the cell 1, a cell 2, and a cell 3. In addition, the second-type DCI is sent on the cell 3, and the second-type DCI is for scheduling a data channel of the cell 3. However, no search space is configured for the cell 2. A network device may indicate the cell 2 to the terminal, so that the terminal counts a number of times of blind detection for the first DCI on the cell 2. In this way, a blind detection opportunity of the cell 3 may be for detection for the second-type DCI.

In another possible case, the M scheduled cells do not include a cell for which no search space is configured. In other words, a search space is configured for each of the M scheduled cells. In this case, the terminal may count the number of times of blind detection for the first DCI on L of the M scheduled cells (that is, $1 \leq L < M$). In addition, in addition to indicating the L cells, the second indication information may further indicate a proportional allocation factor $\alpha$ corresponding to each of the L cells, where $0 < \alpha < 1$. Each proportional allocation factor is for allocating a maximum number of times of blind detection and/or a maximum number of non-overlapping CCEs between the L cells. The L cells may share one proportional allocation factor, or may have different proportional allocation factors. L=1 is used as an example. A network device indicates a proportional allocation factor $\alpha$ to the terminal, where $0 < \alpha < 1$. The proportional allocation factor is for determining a number of times of blind detection for blind detection for the first DCI in the maximum number of times of blind detection on the cell. In other words, the maximum number of times of blind detection on the cell is allocated based on $\alpha$, $\alpha \times$the maximum number of times of blind detection is allocated to the first DCI, and $(1-\alpha) \times$the maximum number of times of blind detection is allocated to the second-type DCI.

According to a third aspect, for how a terminal determines a location of a start CCE after first DCI is introduced, this application provides still another DCI detection method. The method may be performed by a terminal, may be performed by a component (such as a chip or a chip system) configured in the terminal, or may be implemented by a logical module or software that can implement all or a part of functions of the terminal. This is not limited in this application.

For example, a target cell of first DCI is determined, where the first DCI is for scheduling data channels of a plurality of cells, a carrier indication corresponding to the target cell is for determining a location of a start CCE carrying the first DCI, a payload size of the first DCI is different from a payload size of second-type DCI, and the second-type DCI is for scheduling a data channel of one cell. Further, blind detection is performed for the first DCI in a search space of the first DCI based on the location of the start CCE carrying the first DCI. In this way, the terminal can accurately determine the location of the start CCE.

Optionally, in a possible design in which the terminal specifically determines, based on a carrier indication corresponding to a specific cell, the location of the start CCE for carrying the first DCI, a network device indicates the cell to the terminal. The cell may be a primary cell in the plurality of cells, may be a cell with a smallest cell index in the plurality of cells, may be a cell for counting a size budget of the first DCI, or may be a cell for counting a number of times of blind detection for the first DCI. This is not limited in this application.

In another possible design, the terminal and a network device may alternatively determine, according to a predefined rule, to select a carrier indication corresponding to a specific cell to calculate the location of the start CCE carrying the first DCI. Optionally, the predefined rule includes but is not limited to: The target cell is a primary cell in the plurality of cells, a cell with a smallest cell index in the plurality of cells, a cell for counting a size budget of the first DCI, or a cell for counting a number of times of blind detection for the first DCI.

According to a fourth aspect, for a problem in which CCE resource congestion occurs, at a moment, on a cell for sending first DCI, and consequently, CCE allocation may fail during multi-cell co-scheduling, another cell cannot be scheduled, and overall performance is affected, this application provides yet another DCI detection method. The method may be performed by a terminal, may be performed by a component (such as a chip or a chip system) configured in the terminal, or may be implemented by a logical module or software that can implement all or a part of functions of the terminal. This is not limited in this application.

For example, the method includes: The terminal determines a target cell used by a network device to send first DCI next time, to facilitate performing blind detection for the first DCI on the target cell next time. The cell for sending the first DCI may be dynamically switched. In other words, the network device may flexibly adjust the cell for sending the first DCI. For example, a cell currently for sending the first DCI is a cell 1, a cell for sending the first DCI next time is a cell 3. The first DCI is for scheduling data channels of a plurality of cells. The network device flexibly adjusts the cell for sending the first DCI. This helps avoid a case in which a cell cannot be scheduled due to CCE resource congestion on the cell, and further helps ensure a system data transmission rate. In addition, for the terminal, the terminal determines the target cell for sending the first DCI, and performs blind detection for the first DCI on the target cell. This helps improve a success rate of blind detection.

Optionally, the terminal may determine the target cell according to any one of the following methods.

In a first possible method, the network device indicates the target cell to the terminal, and the terminal performs blind detection for the first DCI on the target cell indicated by the network device. This method helps avoid an increase in complexity of the blind detection performed by the terminal. For example, the network device indicates, by using the first DCI, a specific cell used by the terminal to send the first DCI next time. In this way, when receiving the first DCI next time, the terminal may perform blind detection for the first DCI on the target cell indicated by the network device.

A DCI indication manner may be any one of the following:

Manner 1: A new DCI field, for example, a "scheduling cell indicator" field, may be added to indicate a cell index of a cell for sending the first DCI next time.

Manner 2: An existing field in DCI, for example, a "carrier indicator" field, may be reused to indicate a cell index of a cell for sending the first DCI next time.

In a second possible method, the terminal may determine, from a serving cell of the terminal, one or more cells that support flexible switching between a scheduling cell and a scheduled cell (in other words, the terminal uses the one or more cells as the target cell), and perform blind detection for the first DCI on each of the one or more cells. In other words, the terminal performs blind detection for the first DCI on each cell that supports dynamic switching. For example, in a cell configured by the network device, N serving cells support dynamic switching between the scheduling cell and the scheduled cell. In this case, the terminal needs to perform blind detection for the first DCI on each of the N cells. This helps avoid a case in which a specific cell for performing blind detection for the first DCI cannot be determined due to missed DCI detection or a false alarm. For example, in the first method, if first DCI for previous scheduling is missed in detection, a specific cell on which first DCI is to be sent next time cannot be learned of.

For the second possible method, how to count a number of times of blind detection of the terminal is as follows: In a possible design, when the blind detection is performed for the first DCI for each scheduling cell, the number of times of blind detection for the first DCI and a number of non-overlapping CCEs are counted on each scheduled cell. In another possible design, when the blind detection is performed for the first DCI for each scheduling cell, the number of times of blind detection for the first DCI is counted on L cells, where L is less than a total number of scheduled cells.

It may be understood that a number of downlink cells configured by the network device for the terminal may exceed a physical downlink control channel (physical downlink control channel, PDCCH) blind detection capability of the terminal in CA. In this case, an upper limit of a number of times of blind detection of the terminal in each slot on the scheduling cell is related to a PDCCH blind detection capability (a number of reference cells allocated for an upper limit of a number of PDCCH blind detection times) in CA reported by the terminal. An upper limit of a number of the blind detection times allocated to each scheduling cell is configured by the network device. However, in a scenario in which dynamic switching of a scheduling cell is supported, the number of times of blind detection of the terminal clearly increases, and an upper limit of the number of times of blind detection of the terminal also increases. The terminal may determine a specific increment of the upper limit of the number of times of blind detection in any one of the following manners:

Manner a: The increment is predefined in a protocol, and is related to a number of serving cells that support the switching between the scheduling cell and the scheduled cell.

Manner b: The terminal reports one or more capability values, so that the network device configures the upper limit of the number of times of blind detection of the scheduling cell based on the capability values reported by the terminal. Optionally, the capability value is a number that can be increased for the number of times of blind detection and that is determined by the terminal, or the capability value is a maximum number of times of blind detection determined by the terminal. This is not limited in this application.

According to a fifth aspect, this application further provides a DCI detection method. The method may be performed by a network device, may be performed by a component (such as a chip or a chip system) configured in the network device, or may be implemented by a logical module or software that can implement all or a part of functions of the network device. This is not limited in this application.

For example, the network device sends indication information to a terminal, to indicate, to the terminal, which cells are currently co-scheduled. For the terminal, the terminal may determine, based on the indication information sent by the network device, the cells that are currently co-scheduled.

The network device may indicate, to the terminal according to any one of the following methods, the cells that are currently co-scheduled.

In a first possible method, the network device indicates, to the terminal by using RRC signaling, a cell group for co-scheduling, and indicates, by using a dedicated field in first DCI, whether each cell in the cell group is actually scheduled.

The dedicated field in the first DCI may be a field independently configured for each cell in the first DCI, for example, a frequency domain resource assignment (frequency domain resource assignment, FDRA) field or a modulation and coding scheme (modulation and coding scheme, MCS) field.

Optionally, a payload size of the first DCI is related to a number of cells in the cell group in the RRC signaling. If a number of cells actually scheduled by using the first DCI is less than the number of cells configured in the cell group, the network device may pad a special value (for example, 0) in a vacant bit location of the first DCI.

For the terminal, the terminal may determine the payload size of the first DCI based on the number of cells in the cell group in the RRC signaling, to successfully decode the DCI based on the payload size of the first DCI during blind detection. This helps reduce complexity of the blind detection.

In a second possible method, the network device may indicate, by using RRC signaling, MAC CE signaling, and first DCI, information about the cells that are co-scheduled. For example, the network device may configure, by using the RRC signaling, all possible cell groups for co-scheduling, where each group corresponds to one group identifier (group identifier, group ID); and further indicate one of a plurality of group identifiers by using the MAC CE signaling. For example, the group identifier may be sent together with activation information for activating a cell. The network device may further indicate, by using a dedicated field in the first DCI, which cells are currently actually scheduled by using the first DCI.

Optionally, a payload size of the first DCI is related to a number of cells in a cell group indicated in the MAC CE signaling. If a number of cells actually scheduled by using the first DCI is less than the number of cells configured in the cell group, the network device may pad a special value (for example, 0) in a vacant bit location of the first DCI.

For the terminal, the terminal may determine the payload size of the first DCI based on the number of cells in the cell group in the RRC signaling, to successfully decode the DCI based on the payload size of the first DCI during blind detection. This helps reduce complexity of the blind detection.

According to a sixth aspect, this application provides a PDCCH blind detection method. The method may be performed by a terminal, may be performed by a component (such as a chip or a chip system) configured in the terminal, or may be implemented by a logical module or software that can implement all or a part of functions of the terminal.

The method includes: determining a first cell subset from a first cell set corresponding to a first search space set, where the first cell set includes a plurality of cells, the first cell subset includes at least one cell, each cell in the first cell subset is a cell in the first cell set, a PDCCH candidate in the first search space set is for carrying first DCI, and the first DCI is for scheduling a data channel of at least one cell in the first cell set; determining a second cell subset from a second cell set corresponding to a second search space set, where the second cell set includes a plurality of cells, the second cell subset includes at least one cell, each cell in the second cell subset is a cell in the second cell set, a PDCCH candidate in the second search space set is for carrying second DCI, the second DCI is for scheduling a data channel of at least one cell in the second cell set, the first search space set and the second search space set are different, and the first cell set and the second cell set are different; counting a number of times of blind detection on the PDCCH candidate and/or a number of non-overlapping CCEs in the first search space set on each cell in the first cell subset; counting a number of times of blind detection on the PDCCH candidate and/or a number of non-overlapping CCEs in the second search space set on each cell in the second cell subset; and performing blind detection on the PDCCH candidates in the first search space set and the second search space set. In comparison with counting on each scheduled cell, this helps fully use a blind detection opportunity of the terminal.

That the first search space set and the second search space set are different may be understood as that search spaces of the first search space set and the second search space set are the same, but indexes of the first search space set and the second search space set are different.

That the first cell set and the second cell set are different may be understood as that when the first cell set and the second cell set include a same number of cells, a plurality of cell identifiers (identifiers, IDs) in the first cell set and a plurality of cell IDs in the second cell set are not completely the same.

That the first cell set and the second cell set are different may alternatively be understood as that when the first cell set and the second cell set include different numbers of cells, a cell set including a smaller number of cells may be a subset of a cell set including a larger number of cells, or a cell set including a smaller number of cells is not a subset of a cell set including a larger number of cells.

Optionally, the first cell subset includes only a cell with a smallest cell index in the first cell set or a cell for which the first search space set is configured in the first cell set, or the first cell subset is the same as the first cell set. The second cell subset includes only a cell with a smallest cell index in the second cell set or a cell for which the second search space set is configured in the second cell set, or the second cell subset is the same as the second cell set.

A manner of determining the cell subset may be determined according to a predefined rule. For example, the predefined rule may be that a cell subset of any cell set is a cell with a smallest cell index in the any cell set.

Optionally, the method further includes: receiving first information from the network device, where the first information indicates a correspondence between the first search space set and the first cell set and a correspondence between the second search space set and the second cell set.

Optionally, the method further includes: receiving second information from the network device, where the second information indicates a correspondence between the first search space set and a first parameter value and a correspondence between the second search space set and a second parameter value, the first parameter value is for determining a CCE index of a PDCCH candidate in the first search space set, and the second parameter value is for determining a CCE index of a PDCCH candidate in the second search space set. The first parameter value is different from the second parameter value, and the first parameter value and the second parameter value may be different values of a carrier indicator field (carrier indicator field, CIF). To be specific, the first parameter value is CIF=1, and the second parameter value is CIF=2.

It should be understood that the first information and the second information may be carried in same signaling, or may be carried in different signaling. In other words, the first information and the second information may be sent together, or may be sent separately.

Optionally, both the first search space set and the second search space set are configured on a scheduling cell, and the scheduling cell is a cell for receiving the first DCI and the second DCI.

According to a seventh aspect, this application provides a communication apparatus, to implement the method in any one of the first aspect to the sixth aspect. The apparatus includes a corresponding module configured to perform the method. The module included in the apparatus may be implemented by software and/or hardware.

According to an eighth aspect, this application provides a communication apparatus. The communication apparatus includes a processor and an interface circuit. The interface circuit is configured to receive a signal from another communication apparatus and transmit the signal to the processor, or send a signal from the processor to another communication apparatus. The processor is configured to implement the method in any one of the first aspect to the six aspect through a logic circuit or by executing code instructions.

According to a ninth aspect, this application provides a computer-readable storage medium. The computer-readable storage medium stores a computer program or instructions. When the computer program or the instruction are executed, the method in any one of the first aspect to the sixth aspect is implemented.

According to a tenth aspect, this application provides a computer program product. The computer program product includes instructions. When the instructions are run, the method in any one of the first aspect to the sixth aspect is implemented.

According to an eleventh aspect, this application provides a chip system. The chip system includes at least one processor, configured to support implementation of functions in any one of the first aspect to the sixth aspect, for example, receiving or processing data in the foregoing method.

In a possible design, the chip system further includes a memory, the memory is configured to store program instructions and data, and the memory is located inside or outside the processor.

The chip system may include a chip, or may include the chip and another discrete component.

It should be understood that technical solutions of the seventh aspect to the eleventh aspect of this application correspond to those of the first aspect to the sixth aspect of this application, and beneficial effects achieved by the aspects and corresponding feasible implementations are similar. Details are not described again.

## BRIEF DESCRIPTION OF DRAWINGS

FIG. 1 is a diagram of an architecture of a communication system applicable to a method according to an embodiment of this application;
FIG. 2 is a schematic flowchart of a DCI detection method according to an embodiment of this application;
FIG. 3 to FIG. 6 are diagrams of several possible DCI formats of each cell according to an embodiment of this application;
FIG. 7 is a schematic flowchart of another DCI detection method according to an embodiment of this application;
FIG. 8 is a diagram of scheduling of a data channel of each cell according to an embodiment of this application;
FIG. 9 is a schematic flowchart of still another DCI detection method according to an embodiment of this application;
FIG. 10 is a diagram of configuration of a carrier indication according to an embodiment of this application;
FIG. 11 is a schematic flowchart of yet another DCI detection method according to an embodiment of this application;
FIG. 12 is another diagram of scheduling of a data channel of each cell according to an embodiment of this application;
FIG. 13 is a diagram of a possible method for indicating a scheduled cell according to an embodiment of this application;
FIG. 14 is a diagram of another possible method for indicating a scheduled cell according to an embodiment of this application;
FIG. 15 is a schematic flowchart of a PDCCH blind detection method according to an embodiment of this application;
FIG. 16 is a diagram of a structure of a communication apparatus according to an embodiment of this application; and
FIG. 17 is a diagram of another structure of a communication apparatus according to an embodiment of this application.

## DESCRIPTION OF EMBODIMENTS

The following describes the technical solutions in this application with reference to the accompanying drawings.

For ease of understanding a method provided in embodiments of this application, the following first describes a system architecture applicable to the method provided in embodiments of this application. It may be understood that the system architecture described in embodiments of this application is intended to describe the technical solutions in embodiments of this application more clearly, and does not constitute a limitation on the technical solutions provided in embodiments of this application.

FIG. 1 is a diagram of an architecture of a communication system 100 applicable to a method according to an embodiment of this application. As shown in FIG. 1, the communication system includes at least one network device (for example, network devices 110a and 110b in FIG. 1) and at least one terminal (for example, terminals 120a to 120j in FIG. 1). The terminal is connected to the network device in a wireless manner, to implement wireless communication between the terminal and the network device. "Wireless communication" may be referred to as "communication" for short, and "communication" may alternatively be described as "data transmission", "information transmission", "transmission", or the like. The terminals or the network devices may be connected to each other in a wired or wireless manner, to implement mutual communication.

It should be understood that FIG. 1 is merely a diagram, and the communication system may further include another network device such as a wireless relay device and a wireless backhaul device (not shown in FIG. 1). In addition, numbers of devices in the communication system each may be one or more. Alternatively, there may be one or more terminals that access a same network device.

The network device in embodiments of this application may be any device with a wireless transceiver function. The network device in this application may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a wireless fidelity (wireless fidelity, Wi-Fi) system, or the like; or may be a module or a unit, for example, a central unit (central unit, CU) or a distributed unit (distributed unit, DU), that implements a part of functions of a base station. The CU herein implements functions of a radio resource control (radio resource control, RRC) protocol and a packet data convergence protocol (packet data convergence protocol, PDCP) of the base station, and may further implement functions of a service data adaptation protocol (service data adaptation protocol, SDAP). The DU implements functions of a radio link control layer and a medium access control (medium access control, MAC) layer of the base station, and may further implement a part or all of functions of a physical layer. For specific descriptions of the protocol layers, refer to technical specifications related to the 3rd generation partnership project (3rd generation partnership project, 3GPP). The network device may be a macro base station, may be a micro base station or an indoor base station, or may be a relay node, a donor node, or the like. A specific technology and a specific device form that are used by the network device are not limited in embodiments of this application. For ease of description, the following provides descriptions by using an example in which the base station serves as the network device.

The terminal in embodiments of this application may be a device with a wireless transceiver function, and may send a signal to a base station or receive a signal from the base station. The terminal may alternatively be referred to as a terminal device, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be at fixed locations or movable. The base station and the terminal may be deployed on land, including an indoor or outdoor device, a hand-held device, or a vehicle-mounted device, may be deployed on water, or may be deployed on an airplane, a balloon, or an artificial satellite. Application scenarios of the base station and the terminal are not limited in embodiments of this application.

Roles of the base station and the terminal may be relative. For example, the helicopter or uncrewed aerial vehicle 120i in FIG. 1 may be configured as a mobile base station. For the terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as communication apparatuses with a function of the base station, and 120a to 120j in FIG. 1 may be referred to as communication apparatuses with a function of the terminal.

Communication between the base station and the terminal, between the base stations, and between the terminals may be performed on a licensed spectrum, may be performed on an unlicensed spectrum, or may be performed on both the licensed spectrum and the unlicensed spectrum. Communication may be performed on a spectrum below 6 gigahertz (gigahertz, GHz), may be performed on a spectrum above 6 GHz, or may be performed on both the spectrum below 6 GHz and the spectrum above 6 GHz. A spectrum resource for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios such as a smart grid, industrial control, smart transportation, and a smart city. The function of the terminal may be performed by a module (for example, a chip or a modem) in the terminal, or may be performed by an apparatus including the terminal function.

The base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal.

In embodiments of this application, a physical downlink shared channel (physical downlink share channel, PDSCH), a PDCCH, and a physical uplink shared channel (physical uplink share channel, PUSCH) are merely examples of a downlink data channel, a downlink control channel, and an uplink data channel respectively. In different systems and different scenarios, the data channel and the control channel may have different names. This is not limited in embodiments of this application.

To better understand the method provided in embodiments of this application, the following briefly describes terms in this application.

1. Cell: The cell is a radio coverage area identified by using base station identification code or a cell global identity.

Simply speaking, the cell may be understood as an area in which a base station provides radio coverage. In a non-CA scenario, there is usually one cell that provides a service for a terminal, in other words, the terminal has one serving cell. In a CA scenario, there may be a plurality of cells that provide a service for a terminal, in other words, the terminal device has a plurality of serving cells. A cell for initiating initial access is referred to as a PCell, and is for establishing an RRC connection between a user and a network. Based on a transmission requirement of the user, the network may configure one or more SCells for the user, to provide an additional uplink or downlink transmission resource.

2. Carrier: The carrier is a radio signal (electromagnetic wave) that is transmitted by a main device of a base station and that has a specific frequency, bandwidth, and standard, and is a body for carrying information. The carrier may also be referred to as a "carrier frequency".

3. CA: The CA is a key technology for resolving a problem of a limited bandwidth of a single carrier, and supports a larger transmission bandwidth by aggregating two or more CCs. In a CA mechanism, if a base station expects to schedule data channels of a plurality of cells, the base station needs to send a plurality of pieces of DCI for scheduling. Each piece of DCI is for scheduling a data channel of one cell, and the data channel includes a PDSCH or a PUSCH. Based on a carrier on which the DCI is sent, there are two manners: self-carrier scheduling and cross-carrier scheduling. The self-carrier scheduling means that DCI for scheduling a PDSCH or a PUSCH on a carrier is also sent on the carrier. The cross-carrier scheduling means that DCI for scheduling a PDSCH or a PUSCH on a carrier is sent on another carrier, in other words, a plurality of pieces of DCI for scheduling PDSCHs or PUSCHs on a plurality of carriers may be sent on a same carrier.

4. Blind detection (blind detection, BD): A base station may schedule, by using DCI carried on a PDCCH, a terminal to send uplink data and receive downlink data, but the terminal does not know an exact location of the PDCCH carrying the DCI. Therefore, the terminal performs blind detection in a search space (search space, SS) in a control resource set (CORESET).

First, the terminal determines information about a PDCCH candidate based on current configurations of a search space and an associated CORESET. A time domain start symbol location is determined based on the current configuration of the search space, and a number of time domain symbols is determined based on the CORESET associated with the search space. Then, the terminal determines a CCE index (namely, a location of a start CCE and a number of CCEs) of each PDCCH candidate in the CORESET based on the current configurations of the search space and the associated CORESET. The location of the start CCE is specifically determined by using a search space function. The terminal may determine the location of the start CCE according to the following formula:

$$CCE_{start} = L \cdot \left\{ \left( Y_{p,n^{\mu}_{s,f}} + \left\lfloor \frac{m_{s,n_{CI}} \cdot N_{CCE,p}}{L \cdot M^{(L)}_{p,s,\max}} \right\rfloor + n_{CI} \right) \bmod \left\lfloor \frac{N_{CCE,p}}{L} \right\rfloor \right\} + i, \qquad i = 1,2,3\ldots,L-1$$

$n_{CI}$ is a cross-carrier indication, and may be indicated by a CIF in a higher layer signaling cross-carrier scheduling configuration (CrossCarrierSchedulingConfig). If cross-carrier scheduling is not configured for a cell, an indication value is 0. For detailed explanations of the parameters in the formula, refer to the 3GPP technical specification (technical specification, TS) 38.213 v17.2.0.

Finally, the terminal intercepts, starting from the location of the start CCE and based on an aggregation level, a signal on a time-frequency resource for demodulation, and then performs decoding based on a possible DCI length. If a CRC check on a decoded information bit succeeds, the current information bit is DCI sent by the base station to the terminal.

In an existing protocol, a size budget (size budget) of DCI in a blind detection process is specified as follows: For each scheduled cell, a count value of a size budget of DCI is expected to not exceed 4, and a count value of a size budget of DCI scrambled by using a C-RNTI is expected to not exceed 3. Currently, formats of the DCI scrambled by using the C-RNTI mainly include DCI 0-0, DCI 1-0, DCI 0-1, DCI 1-1, DCI 0-2, and DCI 1-2. The two formats DCI 0-0 and DCI 1-0 are referred to as fallback DCI (fallback DCI) which can be sent only on a PCell. If a count value of a size budget of DCI that is scrambled by using the C-RNTI and that is configured on a cell exceeds 3, the base station needs to align, according to an alignment (alignment) rule, the count value of the size budget of the DCI to a value that does not exceed 3. Generally, sizes of DCI 0-0 and DCI 1-0 may be aligned to one size, sizes of DCI 0-1 and DCI 1-1 may be aligned to one size, and sizes of DCI 0-2 and DCI 1-2 may be aligned to one size. The alignment rule includes padding 0 after DCI with a short length, so that sizes of DCI in two formats are the same.

In the blind detection process, a maximum number of times of blind detection and a maximum number of non-overlapping CCEs per slot and per cell are specified as follows:

The maximum number of times of blind detection per slot and per cell is related to a subcarrier spacing. Maximum numbers of blind detection times per slot and per cell that correspond to different subcarrier spacings are shown in Table 1. For example, for a cell whose subcarrier spacing is 15 kilohertz (kHz), a maximum number of times of blind detection in each slot is 44.

Table 1

| μ | Maximum number of times of blind detection per slot and per cell |
|---|---|
| 0 | 44 |
| 1 | 36 |
| 2 | 22 |
| 3 | 20 |

The maximum number of non-overlapping CCEs per slot and per cell is related to the subcarrier spacing, as shown in Table 2. For example, for a cell whose subcarrier spacing is 15 kHz, a maximum number of non-overlapping CCEs in each slot is 56.

Table 2

| μ | Maximum number of non-overlapping CCEs per slot and per cell |
|---|---|
| 0 | 56 |
| 1 | 56 |
| 2 | 48 |
| 3 | 32 |

In a cross-carrier scheduling scenario, a cell for sending the DCI may be referred to as a scheduling cell. If a number of downlink cells configured by the base station for the terminal does not exceed a PDCCH blind detection capability of the terminal in CA, for each scheduled cell, a number of times of blind detection of the terminal in each slot on a scheduling cell is expected to not exceed a maximum number of times of blind detection, and a number of non-overlapping CCEs is expected to not exceed a maximum number, where the maximum number of times of blind detection and the maximum number of non-overlapping CCEs are determined based on a subcarrier spacing of the scheduling cell.

For example, three pieces of DCI are sent on a cell 1, which are respectively DCI 1, DCI 2, and DCI 3. The DCI 1 is for scheduling a data channel of the cell 1, the DCI 2 is for scheduling a data channel of a cell 2, and the DCI 3 is for scheduling a data channel of a cell 3. It is assumed that a subcarrier spacing of the cell 1 is 15 kHz, and subcarrier spacings of the cell 2 and the cell 3 are 30 kHz. The terminal needs to perform blind detection on a time-frequency resource of the cell 1, and a number of times of blind detection needs to be counted in a blind detection process. In this case, a number of times of blind detection counted on the cell 1 cannot exceed 44, a number of times of blind detection counted on the cell 2 cannot exceed 44, and a number of times of blind detection counted on the cell 3 cannot exceed 44. In other words, a total number of times of blind detection of the terminal on the time-frequency resource of the cell 1 cannot exceed 44+44+44=132.

5. Common search space (common search space, CSS) and UE-specific search space (UE-specific search space, USS): A search space may be divided into a CSS and a USS based on a receiving object (or content) of DCI.

To avoid a CCE resource conflict, a network staggers search spaces of different terminals as much as possible, and configures one or more specific search spaces (identified by using a C-RNTI) for each terminal. The specific search space is dedicated to each specific terminal, is notified to the terminal by using RRC signaling, and is referred to as a USS.

A network side also sends a message to a plurality of terminals. In addition, in a random access phase, the network side needs to send a message to a terminal that has not obtained a C-RNTI. In this case, the network side further needs to schedule different predefined RNTIs, for example, a system information (system information, SI)-RNTI indicating to schedule a system message and a paging (paging, P)-RNTI for transmitting a paging message. The information does not depend on a dedicated search space (corresponding to a dedicated PDCCH) of a single terminal, because a plurality of terminals simultaneously monitor the PDCCH. In this case, the CSS (corresponding to a common PDCCH) is defined in 5G new radio (new radio, NR), and the CSS is known to and monitored by all terminals. Considering coverage requirements of different terminals, CCE aggregation levels of the CSS are {4, 8, 16}.

It can be learned from the foregoing that, for each scheduled cell, the count value of the size budget of the DCI is expected to not exceed 4, and the count value of the size budget of the DCI scrambled by using the C-RNTI is expected to not exceed 3. After DCI in existing formats is aligned according to the alignment rule, there are a maximum of three types of payload sizes of DCI. Therefore, once a new type of DCI is introduced, it is easy to exceed a limitation that expected types of payload sizes of DCI for which blind detection is to be performed and that is scrambled by using the C-RNTI does not exceed 3. For example, the 3GPP working item (work item, WI) proposes to use single DCI (single DCI) to schedule the data channels of the plurality of cells. In other words, the base station may schedule the data channels of the plurality of cells by sending one piece of single DCI. In this way, control channel overheads can be reduced. A payload size of the single DCI is different from a payload size of the DCI in the known format. Therefore, after DCI of such a type as the single DCI is introduced, it is easy to exceed a limitation that expected types of payload sizes of DCI for which blind detection is to be performed and that is scrambled by using the C-RNTI does not exceed 3.

Therefore, this application provides a DCI detection method. A target cell is determined for first DCI that is for scheduling a plurality of cells, to count a size budget of the first DCI on the target cell, so that a count value of a size budget of DCI on the target cell does not exceed a preset threshold. Further, blind detection is performed for the first DCI based on a payload size of the first DCI. In this way, even if the first DCI of a new type is introduced, a limitation that the count value of the size budget of the DCI on the target cell does not exceed the preset threshold can be met.

It should be understood that, in this application, an example in which the preset threshold is 3 is used, but this should not constitute any limitation on embodiments of this application. In a future protocol, it is possible that types of payload sizes of DCI for which blind detection is to be performed by the terminal and that is scrambled by using the C-RNTI have another numerical limitation. In addition, in this application, unless otherwise specified, the preset threshold is specific to the types of the payload sizes of the DCI scrambled by using the C-RNTI.

Before the method provided in this application is described in detail, the following descriptions are first provided.

First, to clearly describe the technical solutions in embodiments of this application, terms such as "first" and "second" are used in embodiments of this application to distinguish between same items or similar items that provide basically same functions. For example, first indication information and second indication information are merely for distinguishing between different indication information, and a sequence of the first indication information and the second indication information is not limited. A person skilled in the art may understand that the terms such as "first" and "second" do not limit a number or an execution sequence, and the terms such as "first" and "second" do not indicate a definite difference.

Second, in embodiments of this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects, but does not exclude an "and" relationship between the associated objects. A specific meaning represented by the character "/" may be understood with reference to the context. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c. a, b, and c may be singular or plural.

The following describes in detail the DCI detection method provided in embodiments of this application with reference to the accompanying drawings. It should be understood that the following embodiments describe the method from a perspective of a terminal. The terminal may be any one of the terminals 120a to 120j shown in FIG. 1.

It should be further understood that although the following embodiments are described by using the terminal as an example, an execution body of the method should not be construed as any limitation. The method provided in embodiments of this application can be performed provided that a program that records code of the method provided in embodiments of this application can be run. For example, the terminal may be replaced with a component (for example, a chip or a chip system) configured in the terminal, or another functional module that can invoke and execute the program.

FIG. 2 is a schematic flowchart of a DCI detection method 200 according to an embodiment of this application. The method 200 shown in FIG. 2 may include step 210 and step 220. The following describes in detail the steps in the method 200.

Step 210: A terminal determines a target cell of first DCI.

The first DCI is for scheduling data channels of a plurality of cells, a size budget of the first DCI is counted on the target cell, a count value of a size budget of DCI on the target cell does not exceed a preset threshold (for example, the preset threshold is 3), a payload size of the first DCI is different from a payload size of second-type DCI, and the second-type DCI is for scheduling a data channel of one cell. The first DCI may be, for example, single DCI, and the second-type DCI may be, for example, legacy (legacy) DCI.

In a first possible implementation, a base station sends, to the terminal, first indication information that indicates the target cell. Correspondingly, the terminal receives the first indication information from the base station, and determines the target cell based on the first indication information. In other words, the base station sends the first indication information to the terminal, to indicate, to the terminal, a specific cell on which the size budget of the first DCI is counted. Specifically, the first indication information may be a cell ID. The base station indicates a cell ID of an SCell by using RRC signaling, and the SCell is one of the plurality of cells scheduled by using the first DCI. When performing blind detection for the first DCI in a search space of the first DCI, the terminal counts the size budget of the first DCI on the SCell indicated by the base station. It should be understood that, when indicating the cell ID of the SCell to the terminal, the base station needs to ensure that DCI (the DCI includes the first DCI and the second-type DCI) has no more than three types of payload sizes on the cell.

In a second possible implementation, the terminal determines the target cell according to a predefined rule.

In a first possible design of the predefined rule, the target cell is a cell with a smallest cell index in the plurality of cells, or the target cell is a cell with a largest cell index in the plurality of cells.

In a second possible design of the predefined rule, the target cell is a cell with a smallest count value of a size budget of the second-type DCI in the plurality of cells. In other words, after aligning second-type DCI of each of the plurality of cells according to an alignment rule, the terminal selects the cell with the smallest count value of the size budget of the second-type DCI as the target cell.

In a third possible design of the predefined rule, the target cell is a cell that is in the plurality of cells and on which a count value of a size budget of the second-type DCI does not exceed the preset threshold. For example, the terminal directly counts the size budget of the first DCI on the cell that is in the plurality of cells and on which the count value of the size budget of the second-type DCI does not exceed the preset threshold.

As shown in FIG. 3, both second-type DCI and first DCI are sent on a PCell. The second-type DCI sent on the PCell may include DCI 0-0, DCI 1-0, DCI 0-1, DCI 1-1, DCI 0-2, and DCI 1-2, and the first DCI includes only downlink first DCI or uplink first DCI. In other words, there are a total of seven DCI formats on the PCell. For the second-type DCI, after alignment is performed according to an alignment rule, DCI of three payload sizes (for example, a size A, a size B, and a size C in FIG. 3) is included. Only second-type DCI is sent on an SCell 1, and the second-type DCI herein includes DCI 1-1 and DCI 0-1. In other words, there are two DCI formats on the SCell 1. After alignment is performed according to the alignment rule, DCI of one payload size (for example, the size B in FIG. 3) is included. Only second-type DCI is sent on an SCell 2, and the second-type DCI herein includes DCI 0-1, DCI 1-1, DCI 1-2, and DCI 0-2. In other words, there are four DCI formats on the SCell 2. After alignment is performed according to the alignment rule, DCI of two payload sizes (for example, the size B and the size C in FIG. 3) is included. In this case, a count value of a size budget of the second-type DCI on the SCell 1 is the smallest. Therefore, the terminal counts a size budget of the uplink first DCI or the downlink first DCI on the SCell 1 (for example, a size D or size E in FIG. 3). In this case, a limitation that no more than three payload sizes of DCI are present on each scheduled cell is met.

It should be understood that count values of size budgets of second-type DCI on two or more cells in the plurality of cells may be the same. In this case, the terminal may use a cell with a smallest cell index in the two or more cells as the target cell, use a cell with a largest cell index in the two or more cells as the target cell, or use any one of the two or more cells as the target cell. This is not limited in this application. For example, in the foregoing example, it is assumed that count values of size budgets of the second-type DCI on the SCell 1 and the SCell 2 are the same, and a cell index of the SCell 1 is less than a cell index of the SCell 2. In this case, the terminal may count the size budget of the uplink first DCI or the downlink first DCI on the SCell 1.

It may be understood that there may be a plurality of pieces of first DCI simultaneously. The following describes how to determine the target cell when there are the plurality of pieces of first DCI.

For the first possible implementation, when there are the plurality of pieces of first DCI, size budgets of the plurality of pieces of first DCI may be counted on a same target cell. In this case, the base station may send, to the terminal, the first indication information that indicates the target cell. When there are the plurality of pieces of first DCI, size budgets of the plurality of pieces of first DCI may alternatively be counted on different target cells. In this case, the first indication information may indicate a plurality of target cells, and indicate a DCI format corresponding to each target cell. For example, the first indication information includes a target cell 1 and a target cell 2. The target cell 1 corresponds to the uplink first DCI, and the target cell 2 corresponds to the downlink first DCI. In other words, the size budget of the uplink first DCI is counted on the target cell 1, and the size budget of the downlink first DCI is counted on the target cell 2.

For the first possible design of the predefined rule in the second possible implementation, when there are the plurality of pieces of first DCI, determining the target cell of the first DCI includes: determining the target cell based on a cell index of each of the plurality of cells, where a smaller cell index indicates a higher priority of being determined as the target cell. For example, when there are the uplink first DCI and the downlink first DCI, it is assumed that the plurality of cells include a cell 1, a cell 2, and a cell 3, and cell indexes of the cells meet: cell index of the cell 1>cell index of the cell 2>cell index of the cell 3. In this case, the terminal may count the size budget of the uplink first DCI on the cell 3, and count the size budget of the downlink first DCI on the cell 2. The terminal may preferentially allocate the size budget for the uplink first DCI, in other words, count the size budget of the uplink first DCI on the cell with the smallest index. Alternatively, the terminal may preferentially allocate the size budget for the downlink first DCI, in other words, count the size budget of the downlink first DCI on the cell with the smallest index.

For the second possible design of the predefined rule in the second possible implementation, when there are the plurality of pieces of first DCI, determining the target cell of the first DCI includes: determining the target cell based on a count value of a size budget of second-type DCI on each of the plurality of cells, where a smaller count value indicates a higher priority of being determined as the target cell. For example, when there are the uplink first DCI and the downlink first DCI, it is assumed that the plurality of cells include a cell 1, a cell 2, and a cell 3, and count values of size budgets of second-type DCI on the cells meet: count value of a size budget of second-type DCI on the cell 1>count value of a size budget of second-type DCI on the cell 2>count value of a size budget of second-type DCI on the cell 3. In this case, the terminal may count the size budget of the uplink first DCI on the cell 3, and count the size budget of the downlink first DCI on the cell 2. The terminal may preferentially allocate the size budget for the uplink first DCI, in other words, count the size budget of the uplink first DCI on the cell with the smallest count value of the size budget of the second-type DCI. Alternatively, the terminal may preferentially allocate the size budget for the downlink first DCI, in other words, count the size budget of the downlink first DCI on the cell with the smallest count value of the size budget of the second-type DCI.

It should be understood that different pieces of first DCI determined according to the foregoing described method correspond to different target cells, but this should not constitute any limitation on this embodiment of this application. For example, target cells corresponding to different pieces of first DCI may alternatively be the same. In other words, when there are the uplink first DCI and the downlink first DCI, it is assumed that the size budget of the uplink first DCI is counted on the target cell 1, and the size budget of the downlink first DCI is counted on the target cell 2. The target cell 1 and the target cell 2 may be a same cell, or may be different cells.

For example, when a count value of a size budget of second-type DCI on a cell in a plurality of cells is less than 2, the terminal may count both the size budget of the uplink first DCI and the size budget of the downlink first DCI on the cell. When the count value of the size budget of the second-type DCI in each of the plurality of cells is greater than or equal to 2, the terminal may count the size budget of the uplink first DCI and the size budget of the downlink first DCI on two different cells, or align the uplink first DCI and the downlink first DCI into DCI of a same size, and then count a size budget of aligned first DCI on a cell.

An example in which a target cell of the uplink first DCI is the same as a target cell of the downlink first DCI is as follows.

As shown in FIG. 4, both second-type DCI and first DCI are sent on a PCell. The second-type DCI sent on the PCell includes DCI 0-0, DCI 1-0, DCI 0-1, DCI 1-1, DCI 0-2, and DCI 1-2, and the first DCI includes downlink first DCI and uplink first DCI. In other words, a total of eight DCI formats are sent on the PCell. For the second-type DCI, after alignment is performed according to the alignment rule (after DCI 0-0 and DCI 1-0 are aligned, a payload size of DCI is denoted as a size A; after DCI 0-1 and DCI 1-1 are aligned, a payload size of DCI is denoted as a size B; and after DCI 0-2 and DCI 1-2 are aligned, a payload size of DCI is denoted as a size C), DCI of three payload sizes is included (for example, the size A, the size B, and the size C in FIG. 4). Only second-type DCI is sent on an SCell 1, and the second-type DCI herein includes DCI 1-1. In other words, one DCI format is sent on the SCell 1. In this case, alignment is not needed. In other words, DCI of one payload size (for example, a size F in FIG. 4) is included. Only second-type DCI is sent on an SCell 2, and the second-type DCI herein includes DCI 1-1 and DCI 1-2. In other words, two DCI formats are sent on the SCell 2. In other words, DCI of two payload sizes (for example, the size F and a size G in FIG. 4) is included. A count value of a size budget of DCI on the SCell 1 is the smallest. Therefore, a size budget of the uplink first DCI and a size budget of the downlink first DCI are counted on the SCell 1. In this case, a limitation that no more than three payload sizes of DCI are present on each scheduled cell is met.

Refer to FIG. 5. For another example, both second-type DCI and first DCI are sent on a PCell. The second-type DCI sent on the PCell includes DCI 0-0, DCI 1-0, DCI 0-1, DCI 1-1, DCI 0-2, and DCI 1-2, and the first DCI includes downlink first DCI and uplink first DCI. In other words, there are a total of eight DCI formats on the PCell. For the second-type DCI, after alignment is performed according to the alignment rule, DCI of three payload sizes (for example, a size A, a size B, and a size C in FIG. 5) is included. Only second-type DCI is sent on an SCell 1, and the second-type DCI herein includes DCI 1-1, DCI 0-1, and DCI 1-2. In other words, there are three DCI formats on the SCell 1. After alignment is performed according to the alignment rule, DCI of two payload sizes (for example, the size B and a size G in FIG. 5) is included. Only second-type DCI is sent on an SCell 2, and the second-type DCI herein includes DCI 0-1, DCI 1-1, DCI 1-2, and DCI 0-2. In other words, there are four DCI formats on the SCell 2. After alignment is performed according to the alignment rule, DCI of two payload sizes (for example, the size B and the size C in FIG. 5) is included. In this case, the terminal may align the uplink and downlink first DCI into DCI of a same size, and finally count a size budget of aligned first DCI on the SCell 1. In this case, a limitation that no more than three payload sizes of DCI are present on each scheduled cell is met.

The following describes in detail a rule for aligning the uplink first DCI and the downlink first DCI.

If a size of the downlink first DCI prior to padding (padding) is less than that of the uplink first DC, 0 is padded to an end of the downlink first DCI, so that the downlink first DCI has a same length as the uplink first DCI. The size budget of the downlink first DCI and the size budget of the uplink first DCI are counted on a same serving cell.

If a size of the uplink first DCI prior to padding is less than that of the downlink first DCI, 0 is padded to an end of the uplink first DCI, so that the uplink first DCI has a same length as the downlink first DCI. The size budget of the downlink first DCI and the size budget of the uplink first DCI are counted on a same serving cell.

In addition, if a supplementary uplink (supplementary uplink, SUL) carrier is configured for a terminal, a PUSCH may be sent on an SUL carrier and a non-SUL carrier, so that lengths of the uplink first DCI for the SUL carrier and the non-SUL carrier are equal, a tail of DCI with a shorter length in the first DCI for scheduling the SUL carrier and the non-SUL carrier is padded with 0. For a more specific alignment step, refer to the alignment steps of the second-type DCI.

An example in which a target cell of the uplink first DCI is different from a target cell of the downlink first DCI is as follows.

Refer to FIG. 6. For example, both second-type DCI and first DCI are sent on a PCell. The second-type DCI sent on the PCell includes DCI 0-0, DCI 1-0, DCI 0-1, DCI 1-1, DCI 0-2, and DCI 1-2, and the first DCI includes downlink first DCI and uplink first DCI. In other words, there are a total of eight DCI formats on the PCell. For the second-type DCI, after alignment is performed according to the alignment rule, DCI of three payload sizes (for example, a size A, a size B, and a size C in FIG. 6) is included. Only second-type DCI is sent on an SCell 1, and the second-type DCI herein includes DCI 1-1, DCI 0-1, and DCI 1-2. In other words, there are three DCI formats on the SCell 1. After alignment is performed according to the alignment rule, DCI of two payload sizes (for example, the size B and a size G in FIG. 6) is included. Only second-type DCI is sent on an SCell 2, and the second-type DCI herein includes DCI 0-1, DCI 1-1, DCI 1-2, and DCI 0-2. In other words, there are four DCI formats on the SCell 2. After alignment is performed according to the alignment rule, DCI of two payload sizes (for example, the size B and the size C in FIG. 6) is included. In this case, the terminal may count a size budget of the uplink first DCI and a size budget of the downlink first DCI on the SCell 1 and the SCell 2 respectively, to meet a limitation that no more than three payload sizes of DCI are present on each scheduled cell.

Step 220: The terminal performs blind detection for the first DCI in the search space of the first DCI based on the payload size of the first DCI.

Performing blind detection for the first DCI in the search space of the first DCI may be understood as monitoring, in the search space of the first DCI, a PDCCH carrying the first DCI. In addition, the search space of the first DCI may also be understood as a search space set of the first DCI. Therefore, performing blind detection for the first DCI in the search space of the first DCI may alternatively be replaced with performing blind detection for the first DCI in the search space set of the first DCI.

Optionally, a number of times of blind detection for the first DCI may be counted on the target cell. The number of times of blind detection for the first DCI may be understood as a number of times of monitoring the PDCCH carrying the first DCI.

The terminal needs to perform blind detection in the search space of the first DCI. In a blind detection process, the number of times of blind detection needs to be counted. In this application, after determining the target cell, the terminal may count the number of times of blind detection for the first DCI on the target cell.

When the blind detection is performed for the first DCI, a CSS set takes precedence over a USS set. In other words, a CSS is preferentially searched. If the number of times of blind detection does not exceed a maximum number of times of blind detection (for example, 44) of the target cell after searching in the CSS is completed, a USS is searched, and a USS with a smaller ID number is preferentially searched. If the number of times of blind detection exceeds the maximum number of times of blind detection of the target cell after searching in the CSS is completed, blind detection is no longer performed. In addition, if the number of times of blind detection exceeds the maximum number of times of blind detection of the target cell after a USS set is calculated into the search space in which detection is performed by the terminal, blind detection is not performed on any candidate control channel in the USS set, and blind detection is not performed in a USS set whose ID number is greater than that of the search space set. For the base station, the base station needs to ensure that complexity of the blind detection in the CSS set does not exceed a blind detection capability of the terminal.

It may be understood that a number of non-overlapping CCEs may also be counted on the target cell. The terminal needs to perform blind detection in the search space of the first DCI. In the blind detection process, the number of non-overlapping CCEs needs to be counted. In this application, after determining the target cell, the terminal may count the number of non-overlapping CCEs on the target cell.

Optionally, a location of a start CCE carrying the first DCI is determined based on a carrier indication corresponding to the target cell.

For example, after determining the target cell, the terminal determines, by using RRC signaling, the carrier indication corresponding to the target cell, where a carrier indication corresponding to each of a plurality of carriers is configured in the RRC signaling; and then determines the location of the start CCE based on the carrier indication. It may be understood that, if a carrier aggregation scenario is configured by using the RRC signaling, the base station may configure, by using the RRC signaling, the carrier indication corresponding to each of the plurality of carriers.

Based on the foregoing technical solution, after the first DCI for scheduling the plurality of cells is introduced, the terminal may determine the target cell, to count the size budget of the first DCI on the target cell, so that the count value of the size budget of the DCI on the target cell does not exceed the preset threshold; and further perform blind detection for the first DCI based on the payload size of the first DCI. In this way, even if the first DCI of a new type is introduced, a limitation that the count value of the size budget of the DCI on the target cell does not exceed the preset threshold can be met. This helps reduce complexity of the blind detection.

It can be learned from the blind detection process that, assuming that the first DCI is sent on the cell 1, the terminal needs to perform blind detection for the first DCI on a time-frequency resource of the cell 1. In the blind detection process, the number of times of blind detection needs to be counted. If a counting method in a cross-carrier scheduling scenario is still referred to, to be specific, the terminal counts a number of times of blind detection on each scheduled cell when performing blind detection on a time-frequency resource of the scheduling cell, it is easy to cause a waste of a blind detection opportunity.

Therefore, for a problem of counting the number of times of blind detection in the blind detection process, this application further provides another DCI detection method. When the blind detection is performed for the first DCI in the search space of the first DCI, the number of times of blind detection for the first DCI is counted on L scheduled cells indicated by second indication information, where 1≤L<M, L and M are integers, and M is a total number of scheduled cells. In comparison with counting on each scheduled cell, this helps save a blind detection opportunity. For example, a number of times of blind detection of a cell on which counting is not performed may be for other DCI.

FIG. 7 is a schematic flowchart of a DCI detection method 700 according to an embodiment of this application. The method 700 shown in FIG. 7 may include step 710 and step 720. The following describes in detail the steps in the method 700.

Step 710: A base station sends second indication information to a terminal, where the second indication information indicates L scheduled cells. Correspondingly, the terminal receives the second indication information. 1≤L<M, L and M are integers, and M is a total number of scheduled cells. Specifically, the second indication information may be RRC signaling, the RRC signaling indicates the L scheduled cells, and a number of times of blind detection for first DCI is counted on the L cells.

It may be understood that a number of non-overlapping CCEs may also be counted on the L cells. It is assumed that the first DCI is sent on a cell 1. In this case, the terminal needs to perform blind detection in a search space of the first DCI. In a blind detection process, the number of non-overlapping CCEs needs to be counted. In this application, the terminal may count the number of non-overlapping CCEs on the L cells.

For example, the first DCI is sent on the cell 1, a subcarrier spacing of the cell 1 is 15 kHz, and the base station indicates the terminal to count the number of times of blind detection for the first DCI on a cell 2. In this case, when performing blind detection for the first DCI in the search space of the first DCI, the terminal counts the number of times of blind detection for the first DCI on the cell 2. In addition, the terminal may further count the number of non-overlapping CCEs on the cell 2. When the terminal performs blind detection for the first DCI in the search space of the first DCI, a count value of the number of times of blind detection in each slot is expected to not exceed 44, and a count value of the number of non-overlapping CCEs is expected to not exceed 56.

For another example, the first DCI is sent on the cell 1, a subcarrier spacing of the cell 1 is 15 kHz, and the base station indicates the terminal to count the number of blind detection times of the first DCI on a cell 2 and a cell 3. In this case, when performing blind detection for the first DCI in the search space of the first DCI, the terminal counts the number of times of blind detection for the first DCI on the cell 2 and the cell 3. In addition, the terminal may further count the number of non-overlapping CCEs on the cell 2 and the cell 3. When the terminal performs blind detection for the first DCI in the search space of the first DCI, a count value of the number of times of blind detection in each slot is expected to not exceed 44+44=88, and a count value of the number of non-overlapping CCEs is expected to not exceed 56+56=112.

Step 720: Perform blind detection for the first DCI in the search space of the first DCI, where the number of times of blind detection for the first DCI is counted on the L cells.

The first DCI is for scheduling data channels of a plurality of cells. The terminal performs blind detection for the first DCI in the search space of the first DCI, and counts the number of times of blind detection for the first DCI on the L cells indicated by the first indication information. The L cells are cells in the M scheduled cells.

For example, when a data channel of a PCell is simultaneously scheduled by using first DCI on an SCell and second-type DCI on the PCell, the base station indicates, by using RRC signaling, to count the number of times of blind detection for the first DCI on the SCell, where there may be one or more SCells. As shown in FIG. 8, the data channel of the PCell is scheduled by using the second-type DCI sent on the PCell. In other words, the PCell is self-scheduled by using the second-type DCI. The data channel of the PCell is also co-scheduled by using first DCI sent on an SCell 1. The first DCI is for co-scheduling data channels of the PCell and the SCell 1. In this case, the base station indicates, by using the RRC signaling, the terminal to count the number of times of blind detection for the first DCI on the SCell 1, and not count the number of times of blind detection for the first DCI on the PCell. Therefore, all blind detection opportunities on the PCell may be for the second-type DCI.

How to select the L cells: If the M scheduled cells include a cell for which no search space is configured, the L cells may include the cell for which no search space is configured in the M scheduled cells. For example, the first DCI is sent on the cell 1, and the first DCI is for scheduling data channels of the cell 1, the cell 2, and the cell 3. In addition, the second-type DCI is sent on the cell 3, the second-type DCI is for scheduling a data channel of the cell 3, and no search space is configured for the cell 2. The base station may indicate the cell 2 by using the RRC signaling, so that the terminal counts the number of times of blind detection for the first DCI on the cell 2.

If the M cells co-scheduled by using the first DCI do not include a cell for which no search space is configured, in other words, a search space is configured for each of the M scheduled cells, the terminal may count the number of times of blind detection for the first DCI on L of the M scheduled cells (1≤L<M). In addition to indicating the L cells, the second indication information may further indicate a proportional allocation factor $\alpha$ corresponding to each of the L cells, where $0<\alpha<1$. Each proportional allocation factor is for allocating a maximum number of times of blind detection and/or a maximum number of non-overlapping CCEs between the L cells. The L cells may share one proportional allocation factor, or may have different proportional allocation factors.

A maximum number of times of blind detection on each of the L cells is allocated based on the proportional allocation factor $\alpha$ corresponding to the cell, $\alpha\times$maximum number of times of blind detection is allocated to the first DCI, and $(1-\alpha)\times$maximum number of times of blind detection is allocated to the second-type DCI.

For example, the first DCI is for co-scheduling the PCell and the SCell 1. In addition, the SCell 1 is scheduled by using the second-type DCI, the number of times of blind detection for the first DCI is counted on the SCell 1, and a maximum number of times of blind detection of the SCell 1 is allocated based on $\alpha$. It is assumed that a cell for sending the first DCI is the PCell, a subcarrier spacing of the PCell is 15 kHz. In this case, $44\times\alpha$ is allocated to the first DCI on the PCell, and $44\times(1-\alpha)$ is allocated to the second-type DCI. In other words, in the blind detection process of the first DCI, the terminal counts the number of times of blind detection for the first DCI on the SCell 1, and a count value of the number of times of blind detection cannot exceed $44\times\alpha$.

For another example, the number of times of blind detection for the first DCI is counted on the SCell 1 and the SCell 2, and two proportional allocation factors indicated by the base station are $\alpha_1$ and $\alpha_2$. It is assumed that a cell for sending the first DCI is the PCell, the subcarrier spacing of the PCell is 15 kHz, and maximum numbers of blind detection times of the SCell 1 and the SCell 2 are respectively allocated based on $\alpha_1$ and $\alpha_2$. Therefore, a count value of the number of times of blind detection performed by the terminal for the first DCI cannot exceed $44\times\alpha_1+44\times\alpha_2$. $\alpha_1$ and $\alpha_2$ may be the same or may be different.

It can be inferred from the foregoing that, if the cells co-scheduled by using the first DCI are also scheduled by using the second-type DCI in a single-carrier manner, the base station indicates K proportional allocation factors to the terminal by using RRC, where K may be a number of cells for which both the first DCI and the second-type DCI are configured. For example, the PCell, the SCell 1, and the SCell 2 are co-scheduled by using the first DCI sent on the PCell, and the PCell, the SCell 1, and the SCell 2 are also self-scheduled. In this case, the base station may indicate three proportional allocation factors to the terminal, to allocate maximum numbers of blind detection times of the PCell, the SCell 1, and the SCell 2. It is assumed that the subcarrier spacing of the PCell is 15 kHz. In this case, for the PCell, in the maximum number of times of blind detection of the PCell, a number of times of blind detection for performing blind detection for the first DCI does not exceed $44\times\alpha_1$, and a number of times of blind detection for performing blind detection for the second-type DCI does not exceed $44\times(1-\alpha_1)$. For the SCell 1, in the maximum number of times of blind detection of the SCell 1, a number of times of blind detection for performing blind detection for the first DCI does not exceed $44\times\alpha_2$, and a number of times of blind detection for performing blind detection for the second-type DCI does not exceed $44\times(1-\alpha_2)$. For the SCell 2, in the maximum number of times of blind detection of the SCell 2, a number of times of blind detection for performing blind detection for the first DCI does not exceed $44\times\alpha_3$, and a number of times of blind detection for performing blind detection for the second-type DCI does not exceed $44\times(1-\alpha_3)$. Therefore, in the process in which the terminal performs blind detection for the first DCI in the search space of the first DCI, the count value of the number of times of blind detection is expected to not exceed $44\times\alpha_1+44\times\alpha_2+44\times\alpha_3$.

Based on the foregoing technical solution, when the blind detection is performed for the first DCI in the search space of the first DCI, the number of times of blind detection for the first DCI is counted on the L scheduled cells indicated by the second indication information, where $1\leq L<M$, L and M are integers, and M is the total number of scheduled cells. In comparison with directly counting on each scheduled cell, this helps save a blind detection opportunity. For example, a number of times of blind detection of a cell on which counting is not performed may be for other DCI.

As described above, before performing blind detection, the terminal needs to determine a location of a start CCE, and specifically, determine the location of the start CCE by using a search space function:

$$CCE_{start} = L\cdot\left\{\left(Y_{p,n_{s,f}^{\mu}} + \left\lfloor \frac{m_{s,n_{CI}}\cdot N_{CCE,p}}{L\cdot M_{p,s,\max}^{(L)}} \right\rfloor + n_{CI}\right) \bmod \left\lfloor \frac{N_{CCE,p}}{L} \right\rfloor\right\} + i, \qquad i = 1,2,3\ldots,L-1$$

When a plurality of pieces of DCI are sent on one cell to respectively schedule other cells in a cross-carrier manner, locations of different start CCEs are distinguished between by configuring different $n_{CI}$. However, when the first DCI is for co-scheduling a plurality of cells, locations of start CCEs corresponding to the plurality of cells are the same. Therefore, how to determine the location of the start CCE is an urgent problem to be resolved.

To resolve the problem, this application provides a method. A carrier indication corresponding to one of a plurality of scheduled cells is for determining the location of the start CCE of the first DCI. A carrier indication corresponding to a specific scheduled cell may be specifically indicated to the terminal by the base station. In this way, the terminal can determine the location of the start CCE of the first DCI based on the carrier indication that corresponds to the cell and that is indicated by the base station, to complete blind detection for the first DCI.

FIG. 9 is a schematic flowchart of a DCI detection method 900 according to an embodiment of this application. The method 900 shown in FIG. 9 may include step 910 and step 920. The following describes in detail the steps in the method 900.

Step 910: A terminal determines a target cell of first DCI.

The first DCI is for scheduling data channels of a plurality of cells, a carrier indication corresponding to the target cell is for determining a location of a start CCE carrying the first DCI, a payload size of the first DCI is different from a payload size of second-type DCI, and the second-type DCI is for scheduling a data channel of one cell. In other words, the terminal may determine the target cell of the first DCI, to determine, based on the carrier indication corresponding to the target cell, the location of the start CCE carrying the first DCI.

In a possible design, the base station sends third indication information to the terminal, where the third indication information indicates the target cell. Correspondingly, the terminal receives the third indication information.

For example, the base station may indicate, to the terminal by using RRC signaling, a carrier indication of a specific scheduled cell to be selected, in other words, the base station indicates the target cell to the terminal. Different cells correspond to different carrier indications. The terminal determines, based on the target cell indicated by the base station, the carrier indication corresponding to the target cell, and further determines, by using the foregoing search space function, the location of the start CCE carrying the first DCI.

As shown in FIG. 10, first DCI 1 is for co-scheduling data channels of a PCell, an SCell 1, and an SCell 2, and first DCI 2 is for co-scheduling data channels of an SCell 3 and an SCell 4. The base station indicates the SCell 1 to the terminal, and the terminal determines that the target cell is the SCell 1, determines $n_{CI}$ corresponding to the SCell 1, and determines, based on $n_{CI}$, a location of a start CCE carrying the first DCI 1. Similarly, the base station indicates the SCell 4 to the terminal, and the terminal determines that the target cell is the SCell 4, determines $n_{CI}$ corresponding to the SCell 4, and determines, based on $n_{CI}$, a location of a start CCE carrying the first DCI 2.

Optionally, the target cell may be a PCell in the plurality of cells, may be a cell with a smallest cell index in the plurality of cells, may be a cell for counting a size budget of the first DCI, or may be a cell for counting a number of times of blind detection for the first DCI.

In another possible design, the terminal and the base station may alternatively determine, according to a predefined rule, to select a carrier indication corresponding to a specific cell to calculate the location of the start CCE carrying the first DCI. For example, the predefined rule includes but is not limited to: The target cell is a primary cell in the plurality of cells, a cell with a smallest cell index in the plurality of cells, a cell for counting a size budget of the first DCI, or a cell for counting a number of times of blind detection for the first DCI.

Step 920: The terminal performs blind detection for the first DCI in a search space of the first DCI based on the location of the start CCE carrying the first DCI.

After determining the location of the start CCE, the terminal performs blind detection for the first DCI in the search space of the first DCI.

Based on the foregoing technical solution, the terminal determines the location of the start CCE of the first DCI by using a carrier indication corresponding to one of the plurality of scheduled cells. A carrier indication corresponding to a specific scheduled cell may be specifically indicated by the base station to the terminal, or may be determined according to the predefined rule. In this way, the terminal can accurately determine the location of the start CCE of the first DCI, to complete blind detection for the first DCI.

It should be understood that the foregoing embodiment considers a case in which the first DCI is sent on only one cell. Currently, both a cell for sending the first DCI and the scheduled cell are configured by using RRC. Once the configuration is performed, the cell for sending the first DCI does not change. In this case, if CCE resource congestion occurs, at a moment, on the cell for sending the first DCI, CCE allocation may fail during multi-cell co-scheduling, and another cell cannot be scheduled, affecting overall performance.

Therefore, this application further provides a DCI detection method. A network device flexibly configures a cell for sending the first DCI. For example, in a first slot, the first DCI may be sent on a cell 1, and in a second slot, the first DCI may be sent on a cell 3. In this case, before performing blind detection, the terminal determines a target cell currently for sending the first DCI, and performs blind detection for the first DCI on the target cell.

FIG. 11 is a schematic flowchart of a DCI detection method 1100 according to an embodiment of this application. The method 1100 shown in FIG. 11 may include step 1110 to step 1140. The following describes in detail the steps in the method 1100.

Step 1110: A base station determines a target cell currently for sending first DCI.

The first DCI is for scheduling data channels of a plurality of cells. The target cell for sending the first DCI may be dynamically switched.

For example, the base station may determine, from a plurality of cells in a cell list, the cell for sending the first DCI. The cell list includes a plurality of cells that can be co-scheduled by using the first DCI. The cell list may be configured by using RRC, and the base station determines, based on the cell list, the target cell for sending the first DCI. For example, the base station may configure, by using the RRC, a set of cells that can be co-scheduled by using the current first DCI. A cell in the cell list may be the same as a cell in the set. The base station determines, based on the cell list, the target cell for sending the first DCI. For another example, the base station may configure, by using the RRC, a plurality of cell groups that can be co-scheduled by using the first DCI. A cell in the cell list may be the same as a cell in the plurality of cell groups. The base station may determine, based on the cell list, the target cell for sending the first DCI.

Step 1120: The base station sends the first DCI to a terminal on the target cell.

After determining the target cell for sending the first DCI, the base station sends the first DCI on the target cell.

Step 1130: The terminal performs blind detection for the first DCI on the target cell.

The terminal may perform blind detection for the first DCI on the target cell configured by using the RRC, to receive the first DCI.

It should be understood that the embodiment shown in FIG. 11 is described by using an example in which the base station sends the first DCI to the terminal at an initial moment. In other words, the first DCI is first DCI sent by the base station to the terminal at the initial moment, and the terminal may perform blind detection for the first DCI on the target cell configured by using the RRC. When the first DCI is not the first DCI sent by the base station to the terminal at the initial moment, the terminal may determine a target cell in a manner described in step 1140, and then perform blind detection for the first DCI on the target cell.

Step 1140: The terminal determines a target cell used by the base station to send first DCI next time.

The terminal needs to determine the target cell used by the base station to send the first DCI next time, so that the terminal performs blind detection for the first DCI on the determined target cell next time.

In a first possible manner, the base station indicates the target cell to the terminal, and the terminal may perform, next time, blind detection for the first DCI on the target cell indicated by the base station. For example, the base station indicates, by using the first DCI in step 1130, a specific cell used by the base station to send the first DCI next time. In this way, when receiving the first DCI next time, the terminal may perform blind detection for the first DCI on the target cell indicated by the base station.

It should be noted that the cell for sending the first DCI at the initial moment is still configured by using the RRC, and a cell for sending first DCI next time may be indicated by a field in previous first DCI.

A DCI indication manner may be any one of the following:

Manner 1: A new DCI field, for example, a "scheduling cell indicator" field, may be added to indicate an index of a cell for sending the first DCI next time.

Manner 2: An existing field in DCI, for example, a "carrier indicator" field, may be reused to indicate an index of a cell for sending the first DCI next time.

According to the foregoing method, at the initial moment, the terminal may perform blind detection for the first DCI on the cell that is configured by using the RRC and that is for sending the first DCI; and at subsequent moments, the terminal determines, based on indication information in first DCI obtained through blind detection at a previous moment, a target cell used by the base station to send first DCI at a next moment, and then performs blind detection for the first DCI on the corresponding target cell. This manner helps avoid an increase in complexity of the blind detection performed by the terminal.

In a second possible implementation, the terminal may determine, from a serving cell of the terminal, one or more cells that support flexible switching between a scheduling cell and a scheduled cell, and perform blind detection for the first DCI on each of the one or more cells. In other words, the terminal performs blind detection for the first DCI on each cell that supports dynamic switching. For example, in a cell configured by the base station, N serving cells support dynamic switching between a scheduling cell and a scheduled cell. In this case, the terminal needs to perform blind detection for the first DCI on each of the N cells. This helps avoid a case in which a specific cell for performing blind detection for the first DCI cannot be determined due to missed DCI detection or a false alarm. For example, in the first method, if first DCI for previous scheduling is missed in detection, a specific cell on which first DCI is to be sent next time cannot be learned of.

For the second possible implementation (to be specific, the terminal determines, from the serving cell of the terminal, one or more cells that support dynamic switching between a scheduling cell and scheduled cell, and performs blind detection for the first DCI on the one or more cells), the following describes in detail counting of a number of times of blind detection of the terminal.

In a possible design, when the blind detection is performed for the first DCI for each scheduling cell, the number of times of blind detection for the first DCI and a number of non-overlapping CCEs are counted on each scheduled cell, and the first DCI is for scheduling data channels of a cell 2 and a cell 3. As shown in FIG. 12, at the initial moment, the first DCI is sent on a cell 1. It is assumed that subcarrier spacings of the cell 1, the cell 2, and the cell 3 are all 15 kHz. When dynamic switching of the cell for sending the first DCI is not supported, the terminal performs blind detection for the first DCI on the cell 1. A number of times of blind detection is counted on each scheduled cell, namely, the cell 2 and the cell 3, and the blind detection is performed for a maximum of 44+44 times. If dynamic switching of the cell for sending the first DCI is supported (as shown in FIG. 12, a cell for sending first DCI next time is the cell 2), assuming that the cell that supports dynamic switching includes the cell 1, the cell 2, and the cell 3, the terminal needs to sequentially attempt to perform blind detection for the first DCI on the cell 1, the cell 2, and the cell 3. Therefore, a number of times that the terminal needs to perform blind detection may be three times of an original number of times, to obtain the first DCI through blind detection. In other words, a maximum number of times of blind detection performed by the terminal for the first DCI is 3×(44+44).

In another possible design, when the blind detection is performed for the first DCI for each scheduling cell, the number of times of blind detection for the first DCI is counted on L cells, where L is less than a total number of scheduled cells. It is assumed that the number of times of blind detection for the first DCI is counted on a cell 2, and subcarrier spacings of a cell 1, the cell 2, and a cell 3 are all 15 kHz. When dynamic switching of the cell for sending the first DCI is not supported, the terminal performs blind detection for the first DCI on the cell 1. The number of times of blind detection is counted on the cell 2, and the blind detection is performed for a maximum of 44 times. If dynamic switching of the cell for sending the first DCI is supported, the terminal needs to sequentially attempt to perform blind detection for the first DCI on the cell 1, the cell 2, and the cell 3. A number of times that the terminal needs to perform blind detection may be three times of an original number of times, to obtain the first DCI through blind detection. In other words, a maximum number of times of blind detection performed by the terminal for the first DCI is 3×44.

In a CA scenario, the terminal reports a PDCCH blind detection capability supported by the terminal in CA, in other words, the terminal may report a number $N_{\text{cells}}^{\text{cap}}$ of reference cells allocated for an upper limit of a number of PDCCH blind detection times. When a number of downlink cells configured by the base station for the terminal exceeds the PDCCH blind detection capability $N_{\text{cells}}^{\text{cap}}$ of the terminal in the CA, in each slot of an activated downlink bandwidth part (bandwidth part, BWP) of the scheduling cell, a number of times of blind detection of the terminal is expected to not exceed $M_{\text{PDCCH}}^{\text{total,slot},\mu} = \left\lfloor N_{\text{cells}}^{\text{cap}} \cdot M_{\text{PDCCH}}^{\text{max,slot},\mu} \cdot N_{\text{cells}}^{\text{DL},\mu} / \sum_{j=0}^{3} N_{\text{cells}}^{\text{DL,j}} \right\rfloor$, and a number of non-overlapping CCEs is expected to not exceed $C_{\text{PDCCH}}^{\text{total,slot},\mu} = \left\lfloor N_{\text{cells}}^{\text{cap}} \cdot C_{\text{PDCCH}}^{\text{max,slot},\mu} \cdot N_{\text{cells}}^{\text{DL},\mu} / \sum_{j=0}^{3} N_{\text{cells}}^{\text{DL,j}} \right\rfloor$. For $M_{\text{PDCCH}}^{\text{max,slot},\mu}$ and $C_{\text{PDCCH}}^{\text{max,slot},\mu}$, refer to Table 1 and Table 2.

For example, it is assumed that first DCI 1 is for scheduling data channels of the cell 1, the cell 2, and the cell 3, and the first DCI 1 is sent on the cell 1; and first DCI 2 is for scheduling data channels of a cell 4 and a cell 5, and the first DCI 2 is sent on the cell 4. When dynamic switching of the cell for sending the first DCI is not supported, assuming that $N_{\text{cells}}^{\text{cap}} = 4$, subcarrier spacings of all cells are configured as 15 kHz, and the base station configures five cells, for each scheduled cell, a total number of times of blind detection performed by the terminal in each slot on the cell 1 and the cell 4 is expected to not exceed $\lfloor 4 \times 44 \times 5/5 \rfloor = 4 \times 44$, and a number of non-overlapping CCEs is expected to not exceed $\lfloor 4 \times 56 \times 5/5 \rfloor = 4 \times 56$. Herein, 4×44 is an upper limit of a total number of times of blind detection on the cell 1 and the cell 4, and a number of times allocated to each cell is configured by the base station. In other words, it is assumed that a number of times of blind detection on the cell 1 cannot exceed A, and a number of times of blind detection on the cell 4 cannot exceed B. In this case, A+B=4×44. After the dynamic switching supported by the cell for sending the first DCI, the scheduling cell is switched from the cell 1 to the cell 2. For the second possible manner, the terminal needs to perform blind detection for the first DCI on each possible cell (the cell that supports dynamic switching between the scheduling cell and the scheduled cell). Therefore, the number of times of blind detection of the terminal cannot exceed 3A+B. Herein, an example in which the cell 1, the cell 2, and the cell 3 all support dynamic switching is used. A number of times of blind detection of the terminal on each cell cannot exceed A. Therefore, an upper limit of a total number of times of blind detection is 3A. In other words, after the dynamic switching, the upper limit of the number of times of blind detection of the terminal increases by 2A, and this is the same for the non-overlapping CCE. The increment 2A is related to A, and it can be learned from the foregoing descriptions that A can be flexibly configured by the base station. Therefore, after the dynamic switching, the terminal cannot obtain an accurate value of the upper limit of the number of times of blind detection when determining the upper limit of the number of times of blind detection. The following provides two possible manners to determine an increment of the upper limit of the number of times of blind detection, which is denoted as Q (for example, 2A above).

Manner a: A value of Q is predefined in a protocol, and is related to a number N of serving cells that support switching between the scheduling cell and the scheduled cell. For example, in the foregoing example, the number of times of blind detection that is on the cell 1 and that is configured by the base station for the terminal cannot exceed A. For example, N=3. In this case, the terminal may determine that the increment of the upper limit of the number of times of blind detection is Q=2A.

Manner b: The terminal reports one or more capability values, and the base station configures the upper limit (for example, A described above) of the number of times of blind detection of the scheduling cell based on the capability value reported by the terminal. Optionally, the capability value is a number that can be increased for the number of times of blind detection and that is determined by the terminal, or the capability value is a maximum number of times of blind detection determined by the terminal. This is not limited in this application.

In an example, the terminal reports a capability value, where the capability value indicates the number that can be increased for the number of times of blind detection. In this case, the base station may configure the upper limit for example, A described above) of the number of times of blind detection of the scheduling cell based on the capability value reported by the terminal. For example, when dynamic switching of the scheduling cell between two cells is supported, the terminal reports a capability value, where the capability value indicates a number Q1 that can be increased for the number of times of blind detection. When dynamic switching of the scheduling cell between three cells is supported, the terminal reports a capability value, where the capability value indicates a number Q2 that can be increased for the number of times of blind detection.

In another example, the terminal reports a plurality of capability values, and the base station may configure the upper limit of the number of times of blind detection of the scheduling cell based on one of the capability values. In this case, the base station further needs to indicate, to the terminal, a specific capability value based on which the configuration is performed. For example, the terminal reports three capability values, which are respectively Q3, Q4, and Q5. In this case, the base station may configure the upper limit (for example, A described above) of the number of times of blind detection of the scheduling cell based on one of the capability values. For example, the base station configures the upper limit based on the capability value Q3. In addition, the base station further needs to indicate, to the terminal by using signaling, that the configuration is performed based on the capability value Q3.

Based on the foregoing technical solution, a network device flexibly configures the cell for sending the first DCI. This helps avoid a case in which a cell cannot be scheduled due to CCE resource congestion on the cell, and further helps ensure a system data transmission rate. For the terminal, the terminal determines the target cell for sending the first DCI, and performs blind detection for the first DCI on the target cell. This helps improve a success rate of blind detection.

It should be understood that, in a multi-cell co-scheduling scenario, the base station may configure a plurality of cells for the terminal. Therefore, there are a plurality of possible cell groups (cell groups) for co-scheduling by using first DCI. For example, the plurality of cells configured by the base station for the terminal include a cell 1, a cell 2, a cell 3, a cell 4, a cell 5, a cell 6, a cell 7, and a cell 8. In this case, there may be a plurality of cell groups for co-scheduling by using the first DCI, and the following lists three cell groups: a cell group 1, where the cell group 1 includes the cell 1, the cell 3, the cell 4, and the cell 6; a cell group 2, where the cell group 2 includes the cell 2, the cell 5, and the cell 8; and a cell group 3, where the cell group 3 includes the cell 1 and the cell 2. The cell groups are not listed one by one herein. For the cell groups, a cell actually scheduled by the base station may be one or more cells in a cell group. Therefore, how the terminal determines which cells are currently actually scheduled is an urgent problem to be resolved.

Therefore, this application provides a method. The base station sends indication information to the terminal, to indicate, to the terminal, which cells are currently co-scheduled. For the terminal, the terminal may determine, based on the indication information sent by the base station, the cells that are currently co-scheduled.

The base station may indicate, to the terminal according to any one of the following methods, the cells that are currently co-scheduled.

In a first possible method, the base station indicates, to the terminal by using RRC signaling, a cell group for co-scheduling, and indicates, by using a dedicated field in the first DCI, whether each cell in the cell group is actually scheduled. Correspondingly, the terminal may determine, based on the RRC signaling, a cell group currently for co-scheduling, and determine, by using the dedicated field in the first DCI, which cells are actually scheduled.

The dedicated field in the first DCI may be a field independently configured for each cell in the first DCI, for example, an FDRA field or an MCS field. For example, when all FDRA configuration bits corresponding to a cell are special values (for example, all are 0), it may be considered that the cell is not actually scheduled by using the first DCI; or when all MCS field configuration bits corresponding to a cell are special values (for example, all are 1), it may be considered that the cell is not actually scheduled by using the first DCI.

For example, as shown in FIG. 13, the base station configures eight cells for the terminal, which are respectively the cell 1 to the cell 8. The base station may configure, by using the RRC signaling, a cell group for co-scheduling by using the first DCI. The cell group may include, for example, the cell 1, the cell 3, the cell 4, and the cell 6. The cell group includes four cells, in other words, a maximum of four cells are co-scheduled by using the first DCI. A number of cells actually co-scheduled by using the first DCI may be less than or equal to a number of cells in the cell group. In this way, the terminal may determine the cell group currently for co-scheduling. Further, the base station may indicate, by using the dedicated field in the first DCI, which cells are currently actually scheduled. For example, the base station may configure all FDRA configuration bits corresponding to a cell that is not scheduled by using the first DCI to special values (for example, all are 0). The terminal may determine, based on the dedicated field in the first DCI, which cells are currently actually scheduled. As shown in FIG. 13, the cells actually scheduled by using the first DCI include the cell 1, the cell 3, and the cell 4.

It may be understood that the terminal may further determine a payload size of the first DCI, so that DCI is successfully decoded based on the payload size of the first DCI during blind detection. For example, in the method, the terminal may determine the payload size of the first DCI based on the number of cells in the cell group in the RRC signaling. In other words, the payload size of the first DCI is related to the number of cells in the cell group in the RRC signaling. If the number of cells actually scheduled by using the first DCI is less than the number of cells configured in the cell group, the base station may pad a special value (for example, 0) in a vacant bit location of the first DCI.

In addition, in the first possible method, if the cell group for co-scheduling needs to be changed, the cell group for co-scheduling may be reconfigured through RRC reconfiguration.

In a second possible method, the base station may indicate, by using RRC signaling, MAC CE signaling, and the first DCI, information about the cells that are co-scheduled. For example, the base station may configure, by using the RRC signaling, all possible cell groups for co-scheduling, where each group corresponds to one group identifier; and further indicate one of a plurality of cell groups by using the MAC CE signaling. For example, the group identifier may be sent together with activation information for activating a cell. Correspondingly, the terminal receives the RRC signaling and the MAC CE signaling, and then determines, based on the RRC signaling and the MAC CE signaling, a group that currently has a co-scheduled cell. The base station may further indicate, by using a dedicated field in the first DCI, which cells are currently actually scheduled by using the first DCI. For details, refer to the first possible method. Details are not described herein again.

In addition, the terminal may determine the payload size of the first DCI based on a group identifier indicated in the MAC CE signaling and a cell group corresponding to each group identifier indicated in the RRC signaling. For example, the terminal may determine, based on the group identifier indicated in the MAC CE signaling and the RRC signaling, a cell group corresponding to the group identifier, and determine the payload size of the first DCI based on a number of cells in the cell group. In other words, the payload size of the first DCI is related to the number of cells in the cell group. If the number of cells actually scheduled by using the first DCI is less than the number of cells configured in the cell group, the base station may pad a special value (for example, 0) in a vacant bit location of the first DCI.

For example, as shown in FIG. 14, the base station configures eight cells for the terminal, which are respectively the cell 1 to the cell 8. The base station may configure, by using the RRC signaling, a plurality of possible cell groups for co-scheduling by using the first DCI, where each cell group corresponds to one group identifier; and further indicate one of a plurality of group identifiers by using the MAC CE signaling. For example, the group identifier may be sent together with activation information for activating a cell (as shown in FIG. 14, the cell group 1 is indicated by using the MAC CE signaling). Correspondingly, the terminal receives the RRC signaling and the MAC CE signaling, and then determines, based on the RRC signaling and the MAC CE signaling, a group that currently has a co-scheduled cell. The base station may further indicate, by using the dedicated field in the first DCI, which cells are currently actually scheduled by using the first DCI. As shown in FIG. 14, the cells currently actually scheduled by using the first DCI include the cell 1, the cell 3, and the cell 4.

It should be noted that a cell in a cell group that is for co-scheduling and that is indicated by using the MAC CE should be included in a range of activated cells indicated by using the MAC CE. For example, a range of cells configured by using the RRC≥the range of cells activated by using the MAC CE≥a range of cells that can be co-scheduled and that are indicated by using the MAC CE≥a range of cells that are actually co-scheduled and that are indicated by using the DCI.

The MAC CE may indicate, by using an indication field $C_i$, which cells are activated. When a value of a corresponding indication field $C_i$ of a cell whose cell index is i is 1, it indicates that the cell is activated, and a plurality of cells may be activated at a time by using the MAC CE. When the value of the corresponding indication field $C_i$ is 0, it indicates that the cell is deactivated, and a plurality of cells may be deactivated at a time by using the MAC CE.

As described above, the base station may indicate, by using the MAC CE signaling, one of the plurality of cell groups configured by the base station. For example, an indication field may be added to the MAC CE, to directly indicate a group identifier of one of the plurality of cell groups. For another example, an indication field $M_i$ associated with a cell index may be added to the MAC CE, where i is the cell index. When an indication field $M_i$ corresponding to the cell whose index is i is 1, it indicates that the cell is co-scheduled. A prerequisite for the indication field $M_i$ to be valid is that a corresponding cell is activated. To be specific, when $C_i$ is 1 and $M_i$ is also 1, the cell whose cell index is i is co-scheduled. If $C_i$ is 1 and $M_i$ is also 0, it indicates that the cell is not co-scheduled. If $C_i$ is 0, and none of values configured for $M_i$ takes effect, the cell is not co-scheduled.

Based on the foregoing technical solution, the base station indicates, to the terminal, which cells are co-scheduled, so that the terminal can determine the cells that are currently co-scheduled. In addition, the terminal may further determine, based on a number of the cells, the payload size of the corresponding first DCI during blind detection. This helps reduce complexity of the blind detection. In addition, in comparison with determining the payload size of the first DCI based on a maximum number of cells configured by the base station for the terminal, this helps reduce a number of space domain bits in the first DCI.

FIG. 15 is a schematic flowchart of a PDCCH blind detection method 1500 according to an embodiment of this application. The method 1500 shown in FIG. 15 may include step 1510 to step 1550. The following describes in detail the steps in the method 1500.

Step 1510: A terminal determines a first cell subset from a first cell set corresponding to a first search space set.

The first cell set includes a plurality of cells, the first cell subset includes at least one cell, and each cell in the first cell subset is a cell in the first cell set. A PDCCH candidate in the first search space set is for carrying first DCI, and the first DCI is for scheduling a data channel of at least one cell in the first cell set.

Step 1520: The terminal determines a second cell subset from a second cell set corresponding to a second search space set.

The second cell set includes a plurality of cells, the second cell subset includes at least one cell, and each cell in the second cell subset is a cell in the second cell set. A PDCCH candidate in the second search space set is for carrying second DCI, and the second DCI is for scheduling a data channel of at least one cell in the second cell set.

Both the first DCI and the second DCI may be single DCI. The first search space set and the second search space set are different, and the first cell set and the second cell set are different. That the first search space set and the second search space set are different may be understood as that time-frequency resources of the first search space set and the second search space set are the same, but indexes of the first search space set and the second search space set are different. That the first search space set and the second search space set are different may alternatively be understood as that time-frequency resources of the first search space set and the second search space set are completely different or partially different.

That the first cell set and the second cell set are different may be understood as that when the first cell set and the second cell set include a same number of cells, a plurality of cell indexes (or IDs) in the first cell set and a plurality of cell indexes (or IDs) in the second cell set are not completely the same. In other words, an ID of at least one cell in the first cell set is different from IDs of all cells in the second cell set.

That the first cell set and the second cell set are different may alternatively be understood as that when the first cell set and the second cell set include different numbers of cells, a cell set with a smaller number of cells may be a subset of a cell set with a larger number of cells, or a cell set with a smaller number of cells is not a subset of a cell set with a larger number of cells. For example, when a number of cells included in the first cell set is less than a number of cells included in the second cell set, the cells included in the first cell set are a PCell and an SCell 2, the cells included in the second cell set are the PCell, an SCell 1, and the SCell 2, and the first cell set is a subset of the second cell set. Alternatively, the cells included in the first cell set are a PCell and an SCell 5, the cells included in the second cell set are an SCell 1, an SCell 2, an SCell 3, and an SCell 4, and the first cell set is not a subset of the second cell set. In other words, the two cell sets include different numbers of cells, and an ID of at least one cell in the first cell set is different from IDs of all cells in the second cell set.

For example, the cells included in the first cell set corresponding to the first search space set are the SCell 1 and the SCell 3. If the PDCCH candidate in the first search space set carries the first DCI, the first DCI may be for scheduling the SCell 1, the SCell 3, or the SCell 1 and the SCell 3. In this way, when performing blind detection for the first DCI in the first search space set and obtains one piece of DCI through blind detection, the terminal may determine, based on a cell actually scheduled by using the DCI obtained through blind detection, whether DCI is successfully decoded. For example, if the cell actually scheduled by using the DCI obtained through blind detection is the SCell 1 and/or the SCell 3, the terminal may determine that the DCI is successfully decoded; or if the cell actually scheduled by using the blindly detected DCI is not the SCell 1 and/or the SCell 3, the terminal may determine that the DCI is not successfully decoded. Therefore, in this manner of configuring a corresponding cell set for each search space set, accuracy of DCI blind detection performed by the terminal can be improved.

The cell sets corresponding to the first search space set and the second search space set each may be a subset of co-scheduled cells, or may be different co-scheduled cells, which may be specifically determined based on a definition of the co-scheduled cells.

Definition 1: The co-scheduled cells (co-scheduled cells) may be understood as a maximum cell set that can be scheduled by using one piece of single DCI, and the set may be configured by using higher layer signaling (for example, RRC signaling). For example, four cells are configured for one UE, which are respectively the PCell, the SCell 1, the SCell 2, and the SCell 3. A base station may configure a scheduling relationship between the four cells for the UE by using the RRC signaling. For example, the base station sends first configuration information to the UE, to notify the UE to monitor the single DCI on the PCell, and notify the UE that the single DCI on the PCell can be for simultaneously scheduling a maximum of four cells: the PCell, the SCell 1, the SCell 2, and the SCell 3. In this case, the co-scheduled cells include the PCell, the SCell 1, the SCell 2, and the SCell 3.

Based on the definition 1, the first cell set and the second cell set each are the subset of the co-scheduled cells.

Definition 2: The co-scheduled cells may alternatively be understood as cells actually scheduled by using one piece of single DCI. For example, a base station configures, by using an RRC parameter, a UE to monitor the single DCI on the PCell, and configures that the single DCI on the PCell can be for simultaneously scheduling a maximum of four cells: the PCell, the SCell 1, the SCell 2, and the SCell 3. However, actually, one piece of single DCI is for simultaneously scheduling data channels of two cells: the PCell and the SCell 1. In this case, the co-scheduled cells scheduled by using the single DCI are the PCell and the SCell 1.

Based on the definition 2, the first cell set and the second cell set are different co-scheduled cells.

Step 1530: The terminal counts, on each cell in the first cell subset, a number of times of blind detection on the PDCCH candidate and/or a number of non-overlapping CCEs in the first search space set.

Step 1540: The terminal counts, on each cell in the second cell subset, a number of times of blind detection on the PDCCH candidate and/or a number of non-overlapping CCEs in the second search space set.

The number of times of blind detection may be understood as a number of to-be-monitored PDCCH candidates or a number of PDCCH candidates for monitoring. The number of times of blind detection on the PDCCH candidate may be understood as a number of to-be-monitored PDCCH candidates or a number of PDCCH candidates for monitoring that is obtained based on a counting rule of the number of times of blind detection. Similarly, the number of non-overlapping CCEs in the search space set may be understood as a number of non-overlapping CCEs corresponding to PDCCH candidates for monitoring that is obtained based on a counting rule of the non-overlapping CCE. For the counting rule of the number of times of blind detection and the counting rule of the non-overlapping CCE, refer to counting rules defined in the 3GPP technical specification (technical specification, TS) 38.213. Details are not described herein.

Step 1550: Perform blind detection on the PDCCH candidates in the first search space set and the second search space set.

In this application, the number of times of blind detection on the PDCCH candidate and/or the number of non-overlapping CCEs in the search space set are/is counted, to determine whether the counting exceeds a blind detection capability of the terminal. To be specific, if the counting exceeds the blind detection capability of the terminal, the blind detection is not performed in a current search space; or if the counting does not exceed the blind detection capability of the terminal, the blind detection may be performed in a current search space.

Optionally, the terminal may determine a cell subset from a cell set in any one of the following possible implementations:

In a first possible implementation, a network device sends second configuration information to the terminal, where the second configuration information indicates the first cell subset of the first cell set and the second cell subset of the second cell set. Correspondingly, the terminal receives the second configuration information. In other words, the network device may indicate, to the terminal by using the second configuration information, a cell or cells in the first cell set on which the number of times of blind detection on the PDCCH candidate and/or the number of non-overlapping CCEs in the first search space set are/is counted, and a cell or cells in the second cell set on which the number of times of blind detection on the PDCCH candidate and/or the number of non-overlapping CCEs in the second search space set are/is counted.

In a second possible implementation, the terminal determines a cell subset from each cell set according to a predefined rule.

In a possible design of the predefined rule, the cell subset of the cell set includes only a cell with a smallest or largest cell index in the cell set. For example, the first cell subset includes only a cell with a smallest cell index in the first cell set, and the second cell subset includes only a cell with a smallest cell index in the second cell set.

In another possible design of the predefined rule, the cell subset of the cell set includes only all cells for which a search space set corresponding to the cell set is configured in the cell set. For example, the first cell subset includes only a cell for which the first search space set is configured in the first cell set, and the second cell subset includes only a cell for which the second search space set is configured in the first cell set.

In still another possible design of the predefined rule, the cell subset of the cell set is the cell set. For example, the first cell subset is the same as the first cell set, and the second cell subset is the same as the second cell set.

In an optional embodiment, the network device may configure a plurality of search space sets for the terminal, the plurality of search space sets are all configured for a scheduling cell, and the scheduling cell is a cell for receiving single DCI. In other words, both the first search space set and the second search space set are configured on a scheduling cell, and the scheduling cell is a cell for receiving the first DCI and the second DCI.

Optionally, the first search space set may be further configured for a scheduled cell in the first cell set, and/or the second search space set may be further configured for a scheduled cell in the second cell set.

In an optional embodiment, the method 1500 further includes: The network device sends first information to the terminal, where the first information indicates a correspondence between the first search space set and the first cell set and a correspondence between the second search space set and the second cell set. Correspondingly, the terminal receives the first information.

In an optional embodiment, the method 1500 further includes: The network device sends second information to the terminal, where the second information indicates a correspondence between the first search space set and a first parameter value and a correspondence between the second search space set and a second parameter value. The first parameter value is for determining a CCE index of the PDCCH candidate in the first search space set, and the second parameter value is for determining a CCE index of the PDCCH candidate in the second search space set.

It should be understood that the first parameter value is different from the second parameter value. For example, the first parameter value and the second parameter value may be different values of a CIF. For example, the first parameter value is CIF=1, and the second parameter value is CIF=2. When the first parameter and the second parameter indicate different values of the CIF, for determining CCE indexes of PDCCH candidates in different search spaces based on different parameter values (for example, CIF=1 and CIF=2), refer to related descriptions in an existing protocol. Details are not described herein.

Optionally, when at least one cell other than the scheduling cell in the first cell set corresponding to the first search space set is in a deactivated state, the terminal may determine, based on an active state or a deactivated state of a cell included in the first cell set, field information included in the first DCI and/or a payload size of the first DCI.

In a possible implementation, the first DCI does not include domain information related to a cell in the deactivated state in the first cell set. In this case, the terminal monitors, based on the payload size of the first DCI, the PDCCH candidate for carrying the first DCI, where the first DCI is for scheduling a cell still in the active state in the first cell set.

In another possible implementation, the first DCI includes domain information related to a cell in the deactivated state in the first cell set. In this case, the terminal monitors, based on the payload size of the first DCI, the PDCCH candidate for carrying the first DCI, where the first DCI is for scheduling a cell still in the active state in the first cell set. Alternatively, when parsing or processing the first DCI, the terminal ignores (ignores) or does not process the domain information related to the cell in the deactivated state. Alternatively, the terminal considers that the domain information related to the cell in the deactivated state is a reserved bit (reserved bit), where the reserved bit may be 0 or 1. However, the reserved bit does not indicate any scheduling information.

For example, it is assumed that when the payload size of the first DCI is 30 bits, it indicates that the first DCI can be for simultaneously scheduling data channels of a maximum of three cells in the first cell set (a data channel of each cell may be indicated by using 10 bits). When the first cell set includes the PCell, the SCell 1, and the SCell 2 (the PCell is for scheduling the SCell 1 and the SCell 2), and the SCell 1 is a cell in the deactivated state, the first DCI does not include field information related to the SCell 1, in other words, the payload size of the first DCI is 20 bits. In this case, the terminal monitors, based on the payload size, that is, 20 bits, of the first DCI, the PDCCH candidate for carrying the first DCI. Alternatively, the first DCI includes field information related to the SCell 1, in other words, the payload size of the first DCI is 30 bits. In this case, the terminal monitors, based on the payload size, that is, 30 bits, of the first DCI, the PDCCH candidate for carrying the first DCI. However, it should be understood that, in this case, when parsing or processing the first DCI, the terminal does not process (or ignores) the field information related to the SCell 1, or the related information of the SCell 1 are reserved bits, in other words, indicate no scheduling information. The reserved bits may be 0 or 1.

It should be understood that the first search space set and the second search space set in this embodiment of this application may be any two of the plurality of search space sets. In other words, the base station may configure a correspondence between the plurality of search space sets and a plurality of cell sets for the terminal.

It may be understood that to implement functions in the foregoing embodiments, the base station and the terminal include corresponding hardware structures and/or software modules for performing various functions. A person skilled in the art should be easily aware that, with reference to the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

FIG. 16 and FIG. 17 are diagrams of possible structures of communication apparatuses according to embodiments of this application. These communication apparatuses may be configured to implement functions of the terminal or the base station in the foregoing method embodiments, and therefore can also achieve beneficial effects of the foregoing method embodiments. In this embodiment of this application, the communication apparatus may be one of the terminals 120a to 120j shown in FIG. 1, may be the base station 110a or 110b shown in FIG. 1, or may be a module (such as a chip) used in the terminal or the base station.

As shown in FIG. 16, a communication apparatus 1600 includes a processing module 1610 and a transceiver module 1620. The communication apparatus 1600 is configured to implement functions of the terminal or the base station in the method embodiment shown in FIG. 2, FIG. 7, FIG. 9, FIG. 11, or FIG. 15.

When the communication apparatus 1600 is configured to implement the functions of the terminal in the method embodiment shown in FIG. 2, the processing module 1610 is configured to: determine a target cell of first DCI, where the first DCI is for scheduling data channels of a plurality of cells, a size budget of the first DCI is counted on the target cell, a count value of a size budget of DCI on the target cell does not exceed a preset threshold, a payload size of the first DCI is different from a payload size of second-type DCI, and the second-type DCI is for scheduling a data channel of one cell; and perform blind detection for the first DCI in a search space of the first DCI based on the payload size of the first DCI.

Optionally, the transceiver module 1620 may be configured to receive first indication information from a network device, where the first indication information indicates the target cell. The processing module 1610 is specifically configured to determine the target cell based on the first indication information.

When the communication apparatus 1600 is configured to implement the functions of the terminal in the method embodiment shown in FIG. 7, the transceiver module 1620 is configured to receive second indication information, where the second indication information indicates L scheduled cells, where 1≤L<M, L and M are integers, and M is a total number of scheduled cells. The processing module 1610 is configured to perform blind detection for first DCI in a search space of the first DCI, where the first DCI is for scheduling data channels of a plurality of cells, and a number of times of blind detection for the first DCI is counted on the L cells.

When the communication apparatus 1600 is configured to implement the functions of the terminal in the method embodiment shown in FIG. 9, the processing module 1610 is configured to determine a target cell of first DCI, where the first DCI is for scheduling data channels of a plurality of cells, a carrier indication corresponding to the target cell is for determining a location of a start CCE carrying the first DCI, a payload size of the first DCI is different from a payload size of second-type DCI, and the second-type DCI is for scheduling a data channel of one cell. The processing module 1610 is further configured to perform blind detection for the first DCI in a search space of the first DCI based on the location of the start CCE carrying the first DCI.

For more detailed descriptions of the processing module 1610 and the transceiver module 1620, refer to the related descriptions in the method embodiment shown in FIG. 2, FIG. 7, FIG. 9, FIG. 11, or FIG. 15.

As shown in FIG. 17, a communication apparatus 1700 includes a processor 1710 and an interface circuit 1720. The processor 1710 and the interface circuit 1720 are coupled to each other. It may be understood that the interface circuit 1720 may be a transceiver or an input/output interface. Optionally, the communication apparatus 1700 may further include a memory 1730, configured to store instructions to be executed by the processor 1710, store input data needed by the processor 1710 to run instructions, or store data generated after the processor 1710 runs instructions.

When the communication apparatus 1700 is configured to implement the method shown in FIG. 2, FIG. 7, FIG. 9, FIG. 11, or FIG. 15, the processor 1710 is configured to implement the function of the processing module 1610, and the interface circuit 1720 is configured to implement the function of the transceiver module 1620.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

This application further provides a chip system. The chip system includes at least one processor, configured to implement the method in the embodiment shown in FIG. 2, FIG. 7, FIG. 9, FIG. 11, or FIG. 15.

In a possible design, the chip system further includes a memory, the memory is configured to store program instructions and data, and the memory is located inside or outside the processor.

The chip system may include a chip, or may include the chip and another discrete component.

This application further provides a computer program product. The computer program product includes a computer program (which may also be referred to as code or instructions). When the computer program is run, a computer is enabled to perform the method in the embodiment shown in FIG. 2, FIG. 7, FIG. 9, FIG. 11, or FIG. 15.

This application further provides a computer-readable storage medium. The computer-readable storage medium stores a computer program (which may also be referred to as code or instructions). When the computer program is run, a computer is enabled to perform the method in the embodiment shown in FIG. 2, FIG. 7, FIG. 9, FIG. 11, or FIG. 15.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may alternatively exist in the base station or the terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or a part of the procedures or the functions in embodiments of this application are performed. The computer may be a general-purpose computer, a dedicated computer, a computer network, a network device, a user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include both the volatile storage medium and the non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A downlink control information detection method, comprising:

determining a target cell of first downlink control information DCI, wherein the first DCI is for scheduling data channels of a plurality of cells, a size budget of the first DCI is counted on the target cell, a count value of a size budget of DCI on the target cell does not exceed a preset threshold, a payload size of the first DCI is different from a payload size of second-type DCI, and the second-type DCI is for scheduling a data channel of one cell; and
performing blind detection for the first DCI in a search space of the first DCI based on the payload size of the first DCI.

**2.** The method according to claim 1, wherein the method further comprises:
receiving first indication information from a network device, wherein the first indication information indicates the target cell.

**3.** The method according to claim 1, wherein the target cell is a cell with a smallest cell index in the plurality of cells.

**4.** The method according to claim 1, wherein the target cell is a cell with a smallest count value of a size budget of the second-type DCI in the plurality of cells.

**5.** The method according to any one of claims 1 to 4, wherein a number of times of blind detection for the first DCI and a number of non-overlapping control channel elements CCEs are counted on the target cell.

**6.** The method according to any one of claims 1 to 5, wherein a location of a start CCE carrying the first DCI is determined based on a carrier indication corresponding to the target cell.

**7.** A communication apparatus, comprising a module configured to perform the method according to any one of claims 1 to 6.

**8.** A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 6 through a logic circuit or by executing code instructions.

**9.** A computer-readable storage medium, wherein the storage medium stores a computer program or instructions, and when the computer program or the instructions are executed by a computer, the method according to any one of claims 1 to 6 is implemented.

**10.** A computer program product, wherein the computer program product comprises instructions, and when the instructions are run by a computer, the method according to any one of claims 1 to 6 is implemented.

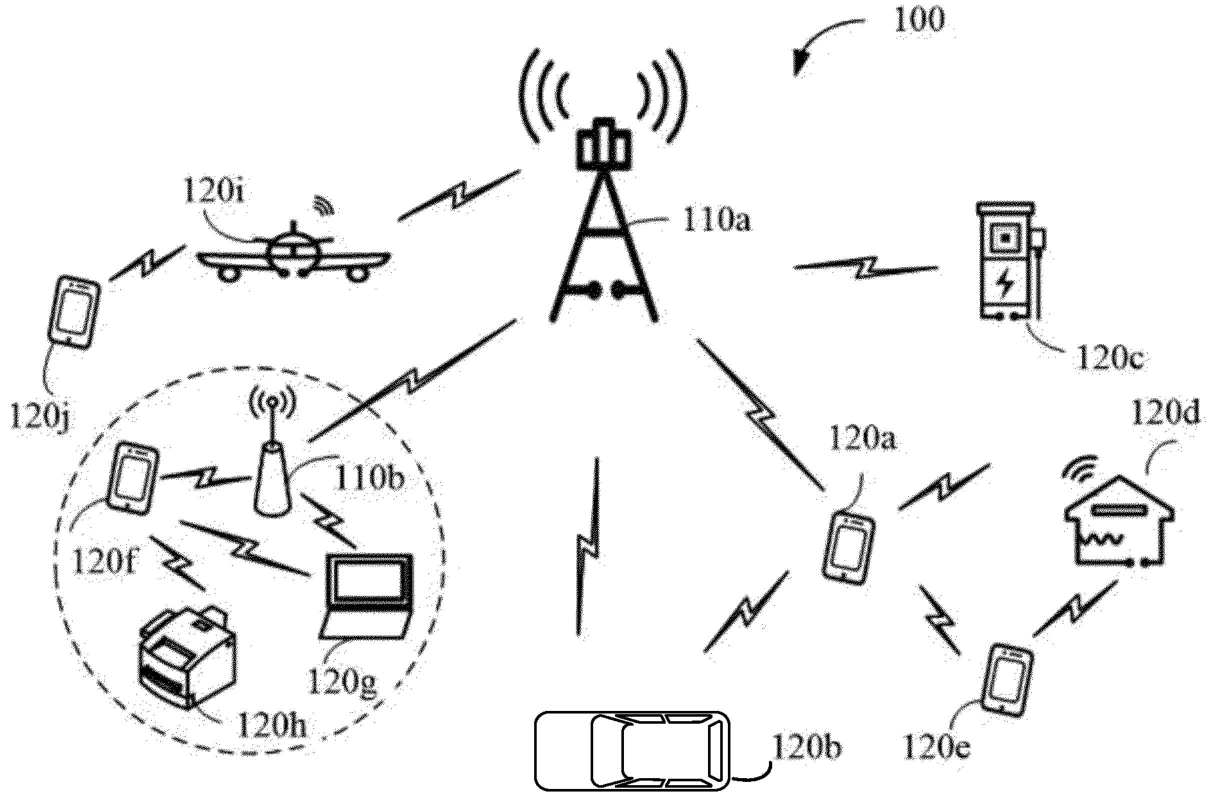
100
110a
120i
120j
120c
120d
120a
110b
120f
120g
120h
120b
120e

FIG. 1

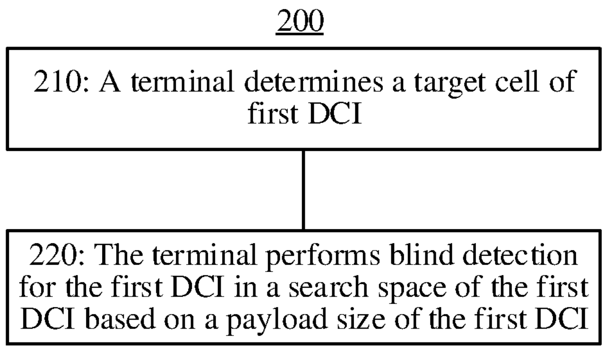
200
210: A terminal determines a target cell of first DCI
220: The terminal performs blind detection for the first DCI in a search space of the first DCI based on a payload size of the first DCI

FIG. 2

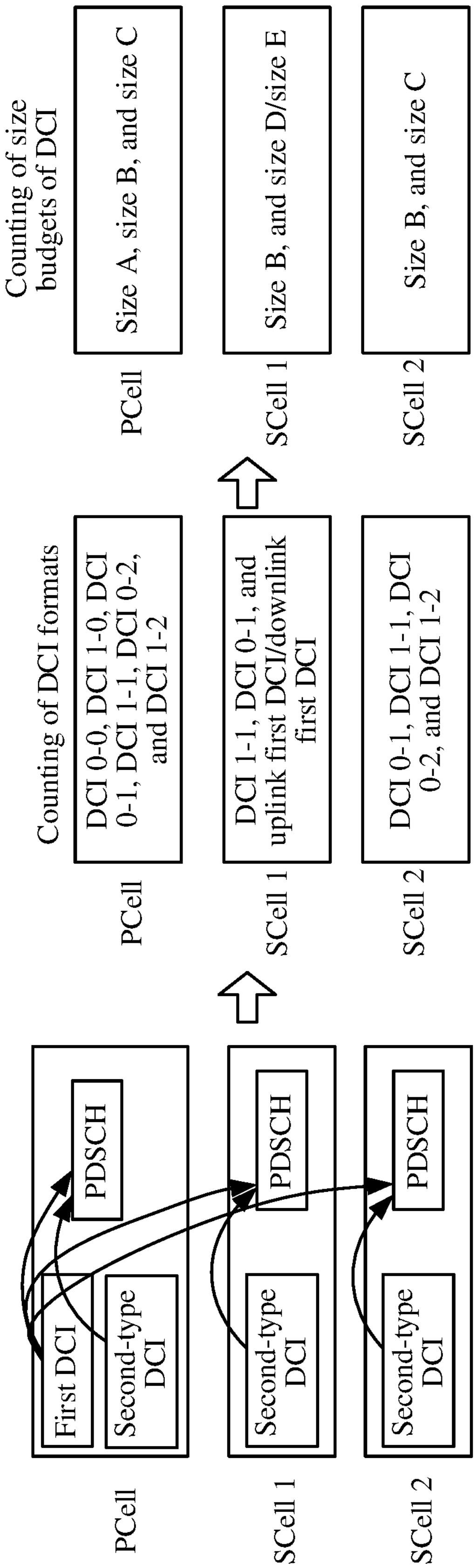
PCell
SCell 1
SCell 2
First DCI
Second-type DCI
PDSCH
Counting of DCI formats
DCI 0-0, DCI 1-0, DCI 0-1, DCI 1-1, DCI 0-2, and DCI 1-2
DCI 1-1, DCI 0-1, and uplink first DCI/downlink first DCI
DCI 0-1, DCI 1-1, DCI 0-2, and DCI 1-2
Counting of size budgets of DCI
Size A, size B, and size C
Size B, and size D/size E
Size B, and size C

FIG. 3

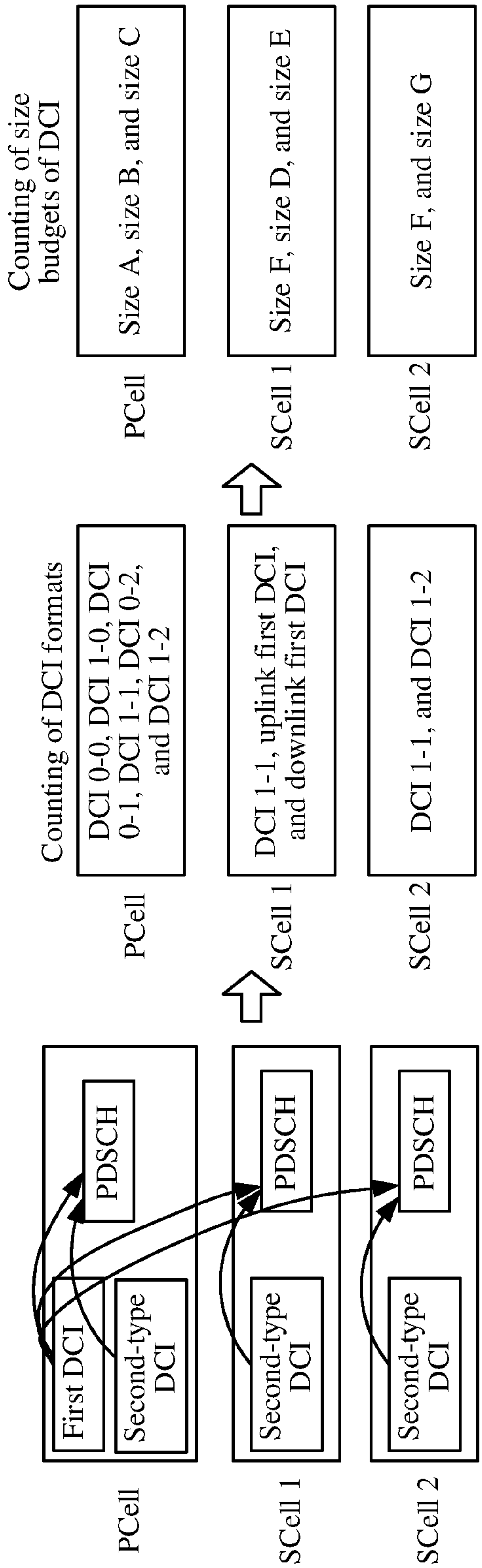
PCell
SCell 1
SCell 2
First DCI
Second-type DCI
PDSCH
Second-type DCI
PDSCH
Second-type DCI
PDSCH
Counting of DCI formats
PCell
DCI 0-0, DCI 1-0, DCI 0-1, DCI 1-1, DCI 0-2, and DCI 1-2
SCell 1
DCI 1-1, uplink first DCI, and downlink first DCI
SCell 2
DCI 1-1, and DCI 1-2
Counting of size budgets of DCI
PCell
Size A, size B, and size C
SCell 1
Size F, size D, and size E
SCell 2
Size F, and size G

FIG. 4

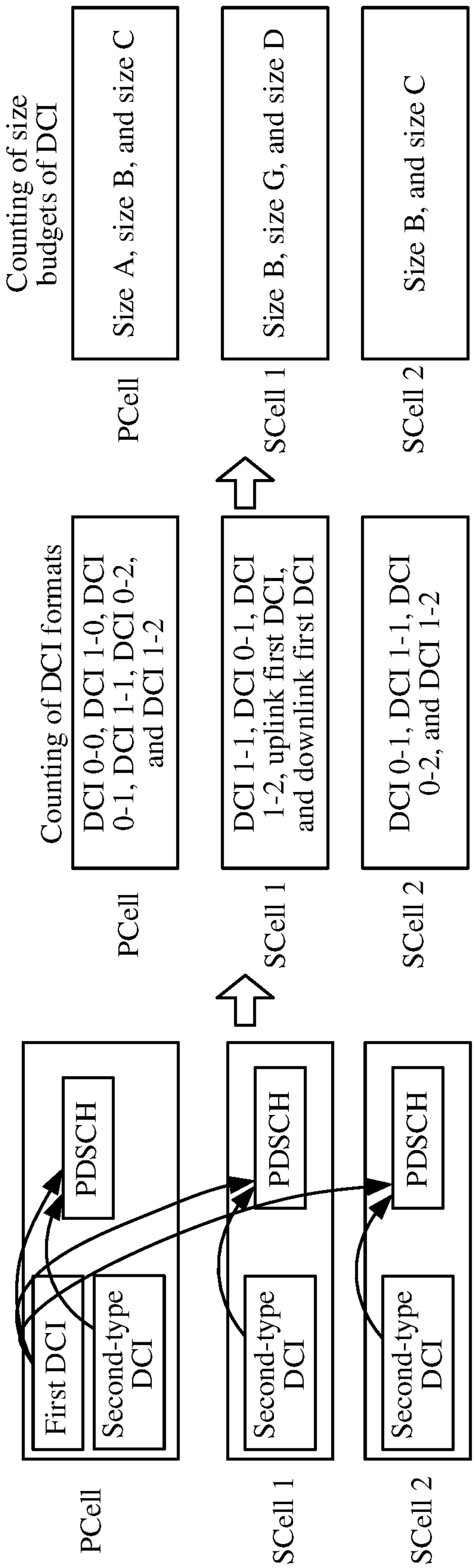
PCell
SCell 1
SCell 2
First DCI
Second-type DCI
PDSCH
Second-type DCI
PDSCH
Second-type DCI
PDSCH
Counting of DCI formats
PCell
DCI 0-0, DCI 1-0, DCI 0-1, DCI 1-1, DCI 0-2, and DCI 1-2
SCell 1
DCI 1-1, DCI 0-1, DCI 1-2, uplink first DCI, and downlink first DCI
SCell 2
DCI 0-1, DCI 1-1, DCI 0-2, and DCI 1-2
Counting of size budgets of DCI
PCell
Size A, size B, and size C
SCell 1
Size B, size G, and size D
SCell 2
Size B, and size C

FIG. 5

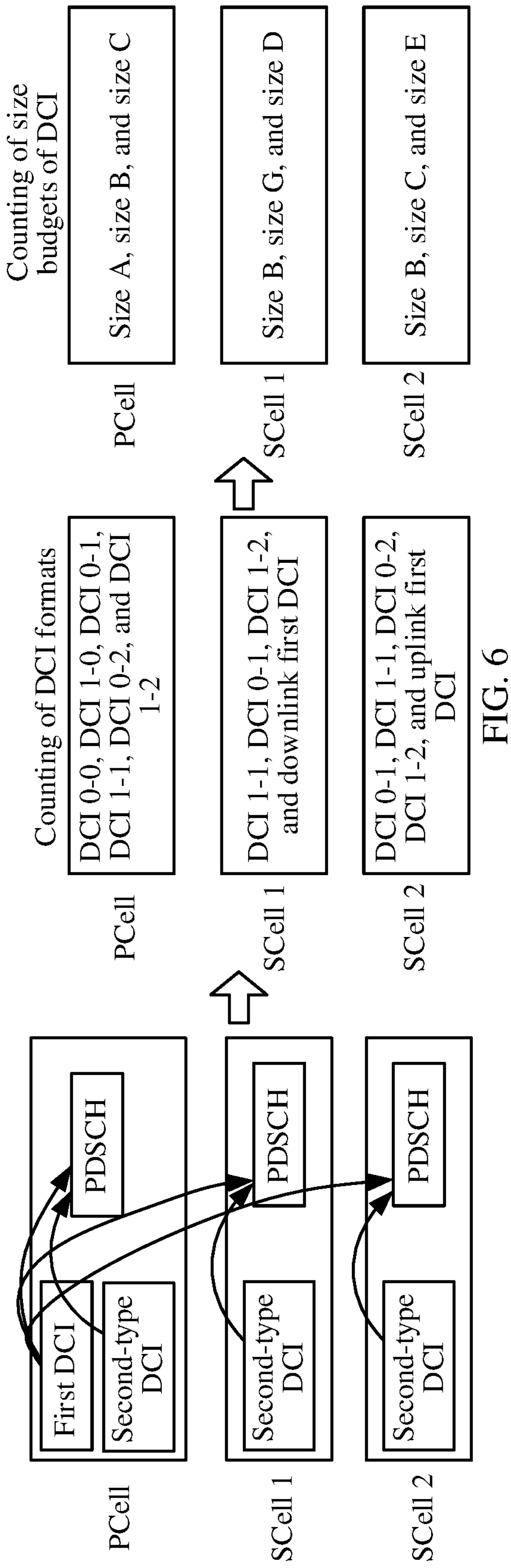
PCell
SCell 1
SCell 2
First DCI
Second-type DCI
PDSCH
Counting of DCI formats
DCI 0-0, DCI 1-0, DCI 0-1, DCI 1-1, DCI 0-2, and DCI 1-2
DCI 1-1, DCI 0-1, DCI 1-2, and downlink first DCI
DCI 0-1, DCI 1-1, DCI 0-2, DCI 1-2, and uplink first DCI
Counting of size budgets of DCI
Size A, size B, and size C
Size B, size G, and size D
Size B, size C, and size E

FIG. 6

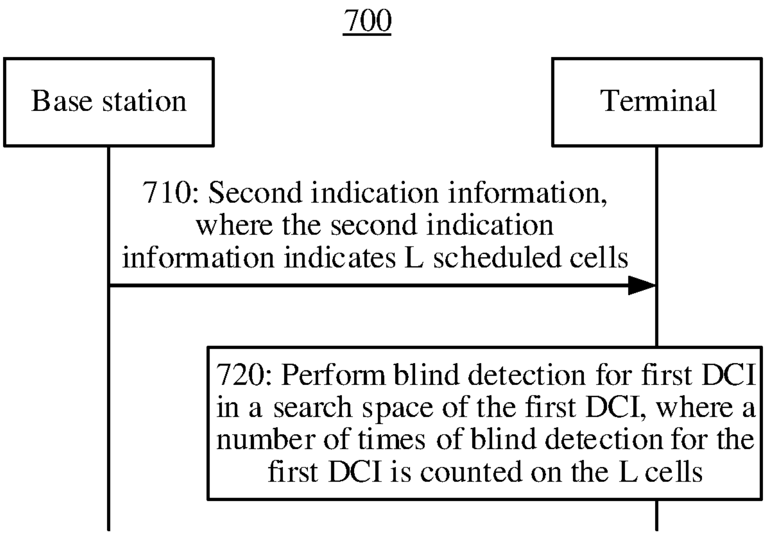


FIG. 7

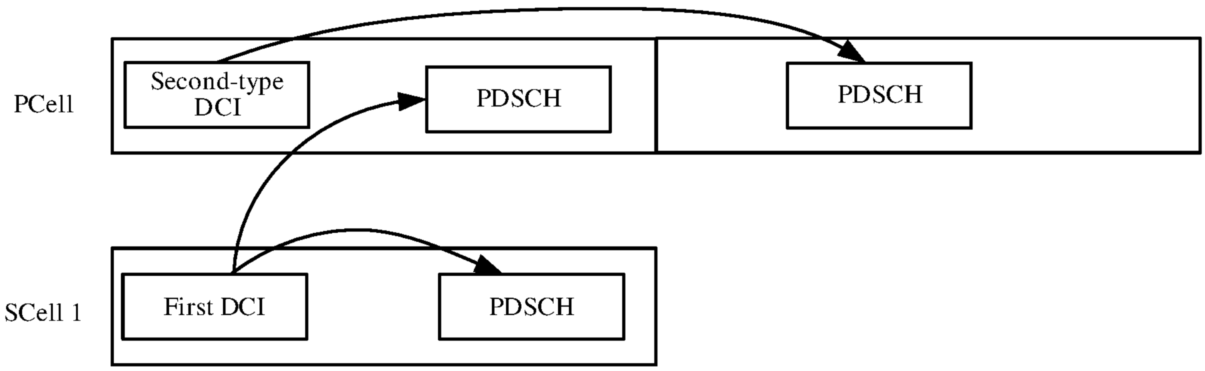


FIG. 8

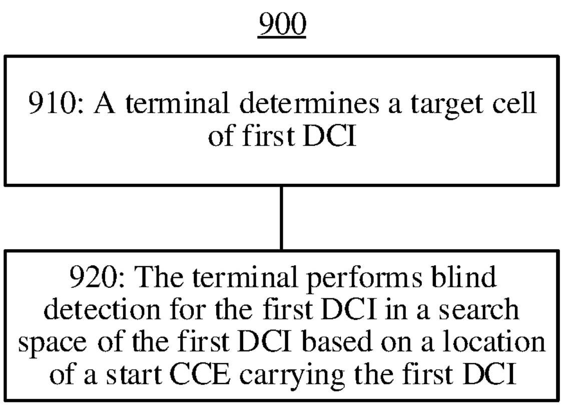


FIG. 9

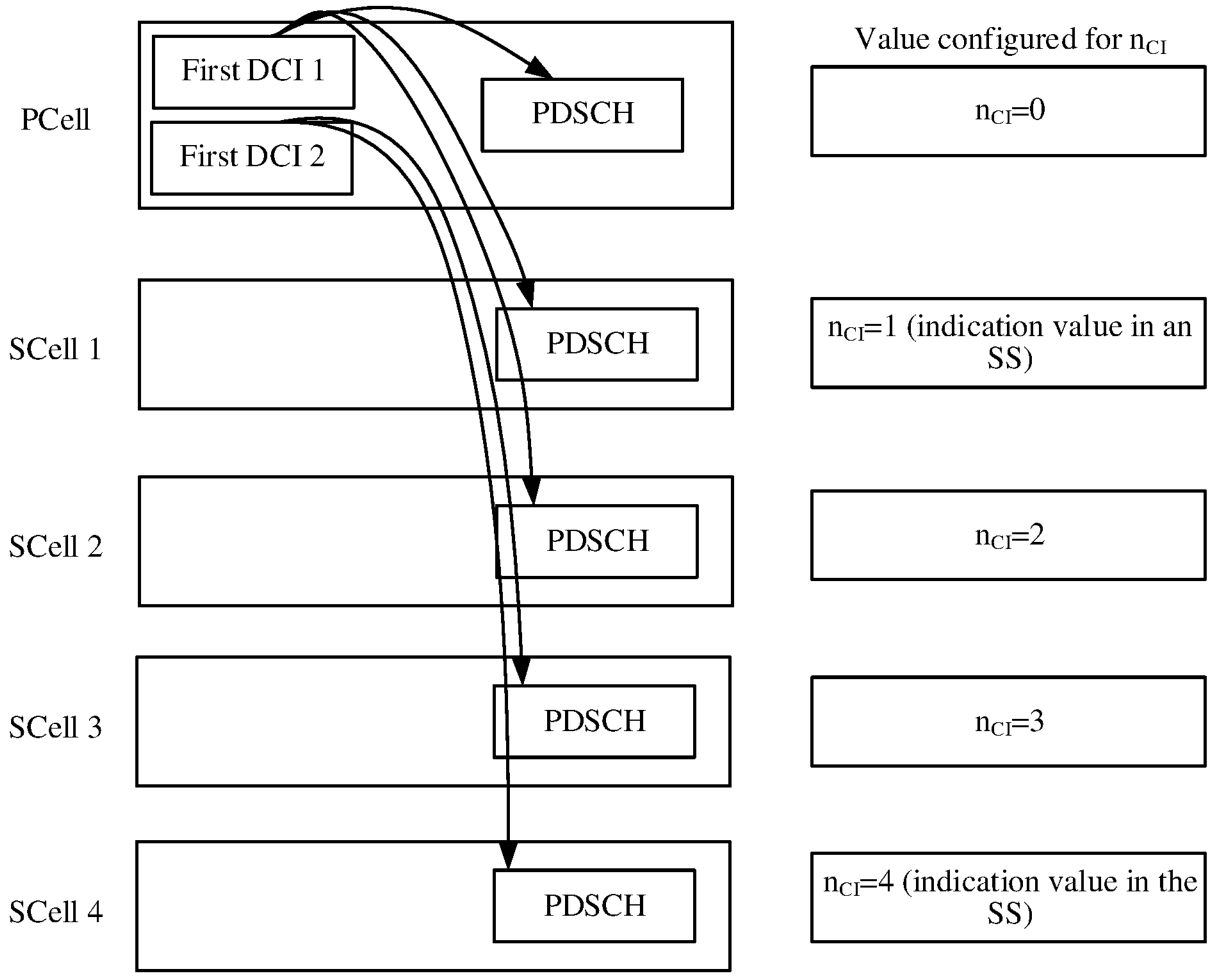
Value configured for $n_{CI}$
PCell
First DCI 1
First DCI 2
PDSCH
$n_{CI}$=0
SCell 1
PDSCH
$n_{CI}$=1 (indication value in an SS)
SCell 2
PDSCH
$n_{CI}$=2
SCell 3
PDSCH
$n_{CI}$=3
SCell 4
PDSCH
$n_{CI}$=4 (indication value in the SS)

FIG. 10

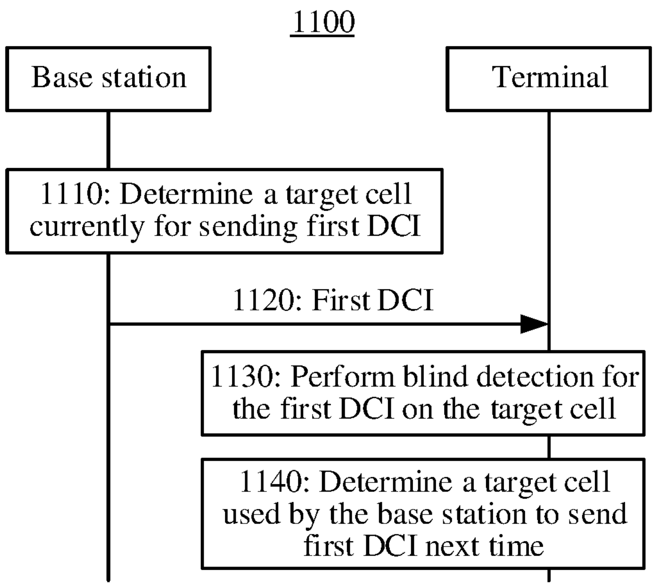
1100
Base station
Terminal
1110: Determine a target cell currently for sending first DCI
1120: First DCI
1130: Perform blind detection for the first DCI on the target cell
1140: Determine a target cell used by the base station to send first DCI next time

FIG. 11

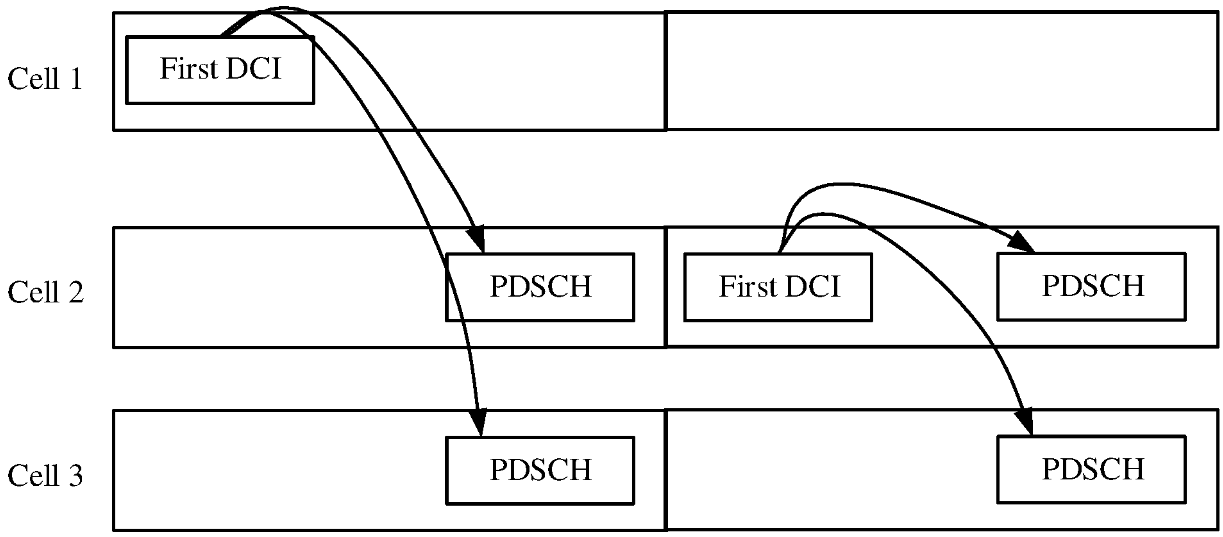
Cell 1
First DCI
Cell 2
PDSCH
First DCI
PDSCH
Cell 3
PDSCH
PDSCH

FIG. 12

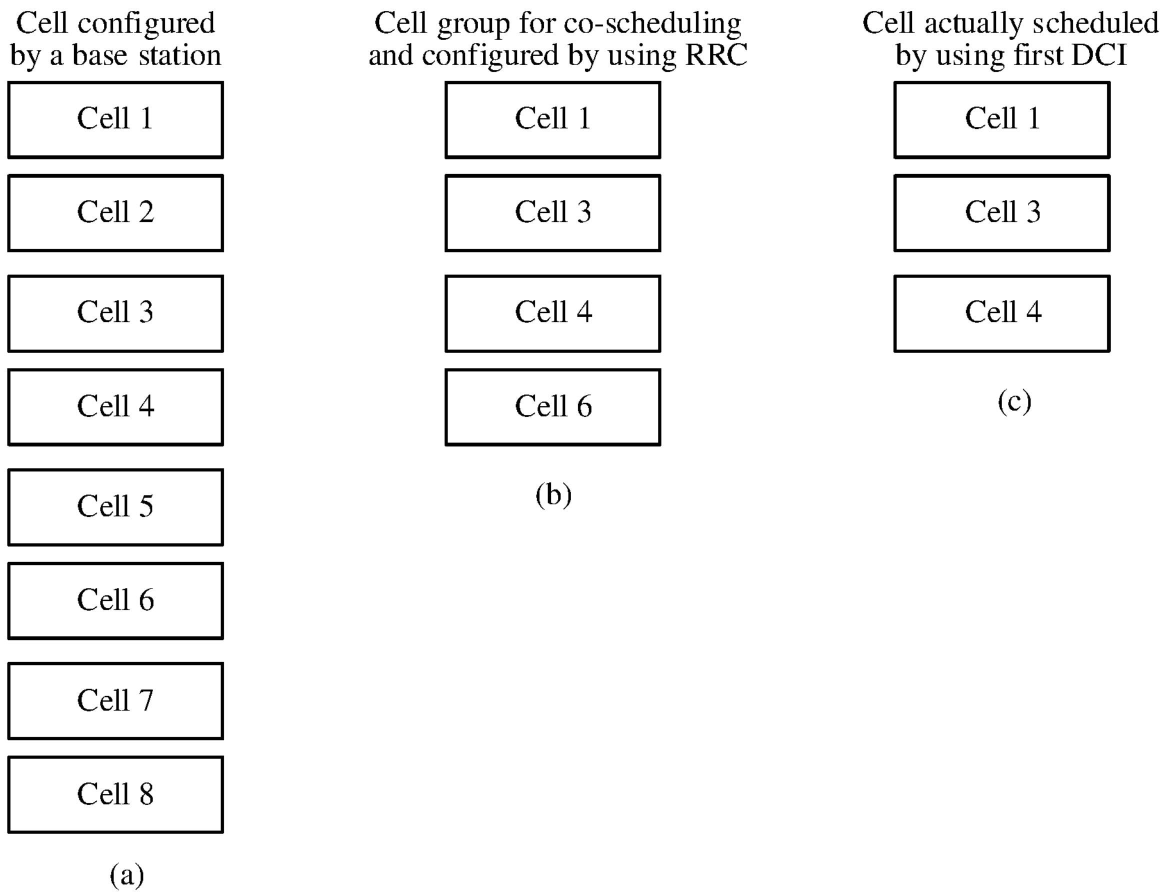
Cell configured by a base station
Cell 1
Cell 2
Cell 3
Cell 4
Cell 5
Cell 6
Cell 7
Cell 8
(a)
Cell group for co-scheduling and configured by using RRC
Cell 1
Cell 3
Cell 4
Cell 6
(b)
Cell actually scheduled by using first DCI
Cell 1
Cell 3
Cell 4
(c)

FIG. 13

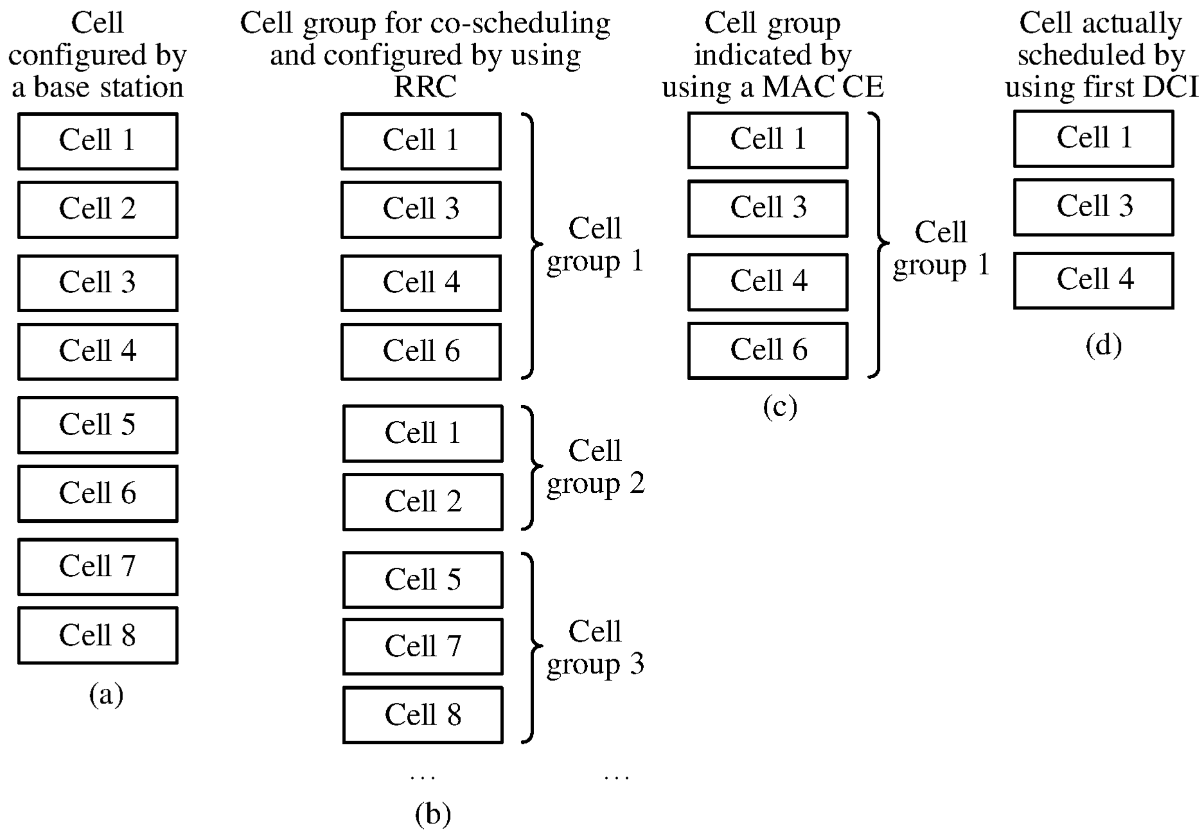
Cell configured by a base station
Cell 1
Cell 2
Cell 3
Cell 4
Cell 5
Cell 6
Cell 7
Cell 8
(a)
Cell group for co-scheduling and configured by using RRC
Cell 1
Cell 3
Cell 4
Cell 6
Cell group 1
Cell 1
Cell 2
Cell group 2
Cell 5
Cell 7
Cell 8
Cell group 3
...
...
(b)
Cell group indicated by using a MAC CE
Cell 1
Cell 3
Cell 4
Cell 6
Cell group 1
(c)
Cell actually scheduled by using first DCI
Cell 1
Cell 3
Cell 4
(d)

FIG. 14

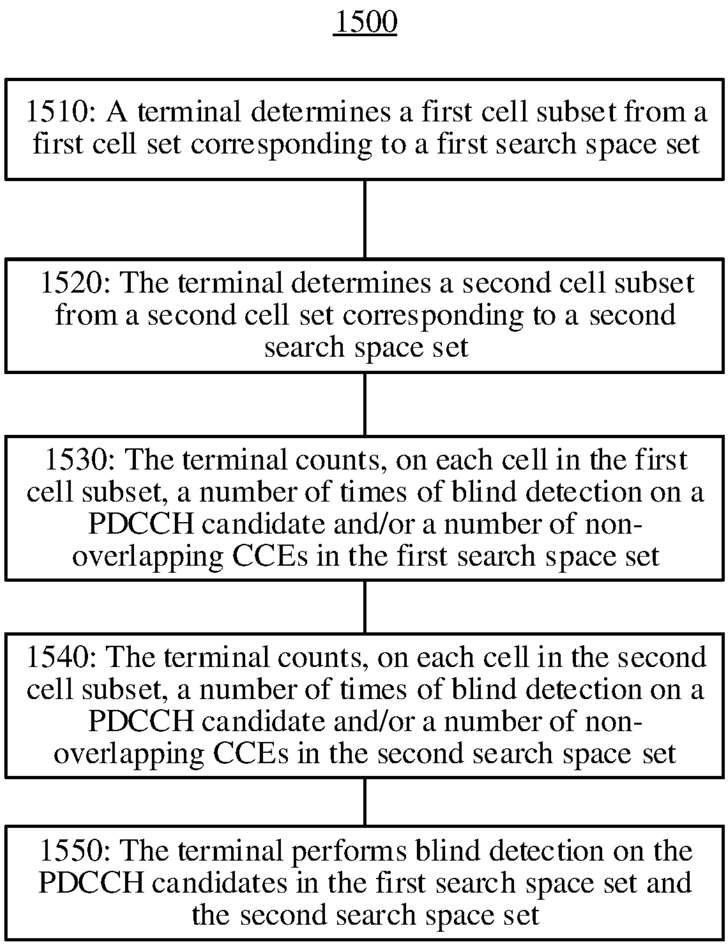
1500
1510: A terminal determines a first cell subset from a first cell set corresponding to a first search space set
1520: The terminal determines a second cell subset from a second cell set corresponding to a second search space set
1530: The terminal counts, on each cell in the first cell subset, a number of times of blind detection on a PDCCH candidate and/or a number of non-overlapping CCEs in the first search space set
1540: The terminal counts, on each cell in the second cell subset, a number of times of blind detection on a PDCCH candidate and/or a number of non-overlapping CCEs in the second search space set
1550: The terminal performs blind detection on the PDCCH candidates in the first search space set and the second search space set

FIG. 15

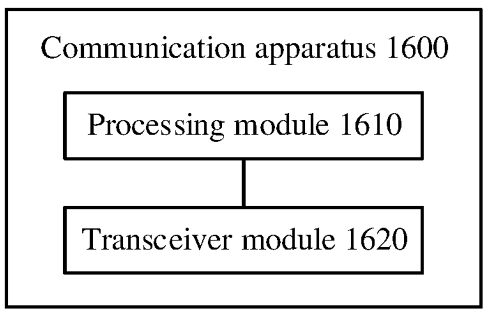
Communication apparatus 1600
Processing module 1610
Transceiver module 1620

FIG. 16

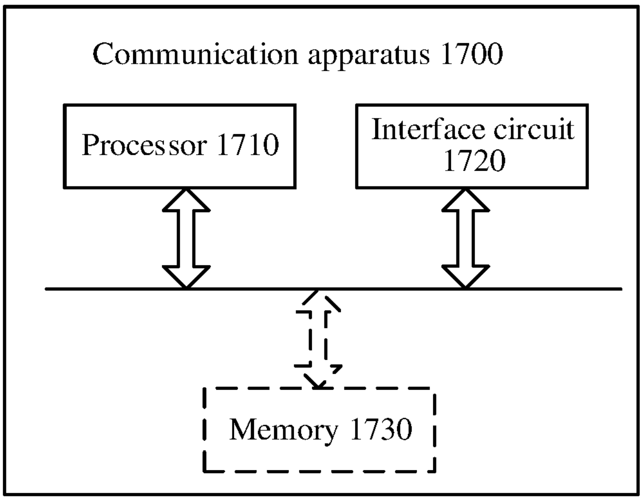
Communication apparatus 1700
Processor 1710
Interface circuit 1720
Memory 1730

FIG. 17

**INTERNATIONAL SEARCH REPORT**

International application No.
**PCT/CN2023/112347**

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXT, DWPI, IEEE, 3GPP: single DCI, DCI, 大小, 尺寸, 载荷, 载波, 主小区, 辅小区, 预算, 阈值, 门限, 盲检, size, payload, carrier, CC, Pcell, Scell, budget, threshold, BD, blind, detection, legacy DCI

**C. DOCUMENTS CONSIDERED TO BE RELEVANT**

| Category* | Citation of document, with indication, where appropriate, of the relevant passages | Relevant to claim No. |
|---|---|---|
| X | CN 114826537 A (HUAWEI TECHNOLOGIES CO., LTD.) 29 July 2022 (2022-07-29) description, paragraphs 0093, 0107-0111, 0116-0124, and 0131-0138, and figures 8 and 9 | 1-10 |
| A | CN 110475356 A (VIVO COMMUNICATION TECHNOLOGY CO., LTD.) 19 November 2019 (2019-11-19) entire document | 1-10 |
| A | US 2020045707 A1 (LG ELECTRONICS INC.) 06 February 2020 (2020-02-06) entire document | 1-10 |
| A | WO 2022029312 A1 (TELEFONAKTIEBOLAGET LM ERICSSON (PUBL)) 10 February 2022 (2022-02-10) entire document | 1-10 |
| A | HUAWEI et al. "Discussion on multi-cell PUSCH/PDSCH scheduling with a single scheduling DCI" *3GPP TSG-RAN WG1 Meeting #109-e R1-2203135,* 20 May 2022 (2022-05-20), sections 3-4 | 1-10 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 October 2023** | **16 October 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/112347**

| Patent document cited in search report | Publication date (day/month/year) | Patent family member(s) | Publication date (day/month/year) |
|---|---|---|---|
| CN 114826537 A | 29 July 2022 | None | |
| CN 110475356 A | 19 November 2019 | None | |
| US 2020045707 A1 | 06 February 2020 | EP 3651528 A1 | 13 May 2020 |
| | | WO 2020027473 A1 | 06 February 2020 |
| | | KR 20200015381 A | 12 February 2020 |
| | | JP 2020532894 A | 12 November 2020 |
| | | CN 110999479 A | 10 April 2020 |
| WO 2022029312 A1 | 10 February 2022 | TW 202207744 A | 16 February 2022 |
| | | EP 4193540 A1 | 14 June 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210970323
- CN 202211214477